# EUROPEAN PATENT APPLICATION

(11) **EP 1 273 402 A2**
(43) Date of publication of application: **08.01.2003**
(21) Application number: 02254686.5
(22) Date of filing: 03.07.2002
(51) Int. Cl.: B26D 3/30, B23D 45/00

(54) **Device and Method for automatically cutting tablets**

(30) Priority: 03.07.2001 US 898313
(71) Applicant: Automed Technologies, Inc., Vernon Hills, IL 60061 (US)
(72) Inventor: Czarnek, Robert, Johnstown, Pennsylvania 15904 (US); Orkin, Fredric I., Highland Park, Illinois 60035 (US)
(74) Representative: Howden, Christopher Andrew

(57) **Abstract**

The invention is a device for automatically cutting small objects, primarily objects in the form of tablets and a method of tablet cutting. The device includes tablet guide, alignment and cutter apparatus. The tablet-guide moves a tablet to a cutting position. The alignment apparatus aligns the tablet for cutting at the cutting position. The cutting apparatus automatically cuts the fully aligned tablet into tablet portions having equal volume. The device may include vacuum apparatus for removing cut tablet particulates and may include ejector apparatus for ejecting cut tablet portions.

## Description

### Field of the Invention

This invention is related generally to cutting apparatus and, more specifically, to apparatus for automatically cutting small objects, such as tablets.

### Background of the Invention

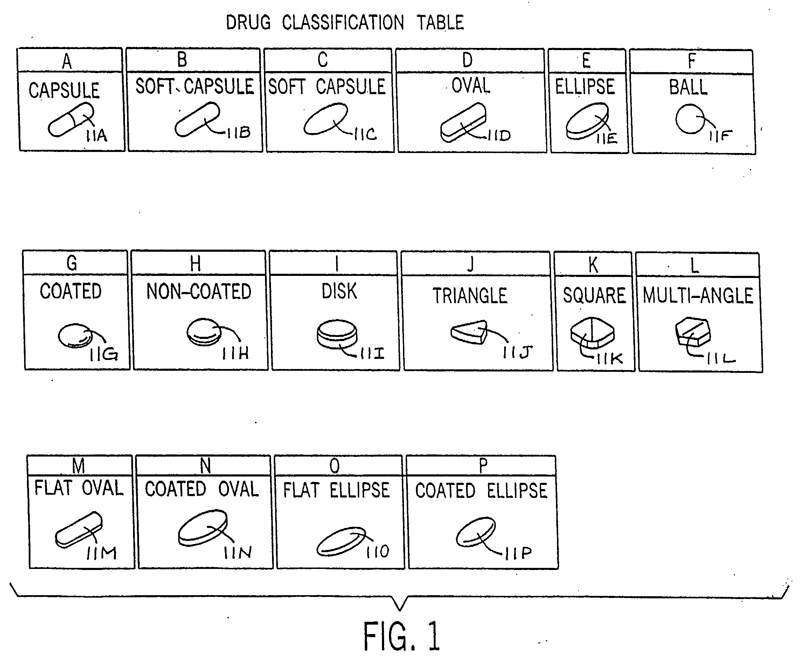

Many types of medications, vitamins, supplements and other compounds are intended to be taken orally and are provided in the form of solid tablets. These types of tablets are provided with a predetermined concentration of one or more active constituents and are commercially-available in many different tablet shapes and sizes. Figure 1 is a table showing the geometry of drug tablets representative of the types of tablets commercially available. As illustrated in Figure 1, these representative tablet shapes include capsules, ovals, ellipses, spheres, disks, triangles, squares and other shapes.

A significant number of people require an "intermediate" dosage-unit of medication or other active constituent provided in the tablet. An intermediate dosage-unit is a dosage-unit which includes less than the full amount of active constituent provided in the typical commercially-available tablet. For example, it may be inappropriate for a child or small adult to take an entire tablet containing a full medication dosage-unit because the concentration of the medication or other active constituent may exceed a safe level for a person of that age or size. Unfortunately, many types of tablet-form medications are commercially-available only in full dosage-unit concentrations.

One way for people to obtain oral solid tablets with an intermediate dosage-unit is to cut a conventional tablet in half (or in other fractional sizes such as quarters or eighths) thereby producing smaller tablets each having a lesser absolute amount of the active constituent or constituents. This tablet portion may then be given alone or in combination with another dosage-unit to meet the person's dosage requirements.

Another benefit of cutting oral solid tablets into smaller portions is that the reduced size of the tablet may make it easier for a person to ingest the tablet. For instance, certain tablets are large and may be provided in shapes which are difficult for children and small adults to swallow. Reducing the size of the tablet can, desirably, make swallowing the tablet easier.

There are also valid economic reasons which may necessitate cutting full dosage-unit tablets into smaller "intermediate" portions. For example, identical chemical compositions may be commercially-available in more than one form, each form having a unique concentration of the active constituent or constituents. Thus, the same chemical composition may be available in one tablet form having a 5 mg concentration of the active constituent and may also be available in a second tablet form having a 2.5 mg concentration of active constituent.

Importantly, the cost per milligram of the active constituent in the higher-concentration form of the tablet is often significantly less than that of the tablet including the lower concentration of active constituent. By cutting a higher-concentration tablet into smaller portions, rather than purchasing two of the lower-concentration tablets, it may be possible to reduce the cost of the medication or other active constituent to the patient. For hospitals and large care-giving organizations which dispense large amounts of oral solid medication to their patients, the cost savings could be significant.

A variety of devices are available to cut tablets into smaller portions. All of these devices have numerous disadvantages. One of the most common ways of cutting tablets is with a simple hand-held knife or razor blade. The tablet is simply clamped between the blade and a hard surface until the tablet is cut through or breaks. Many pharmacies and institutional facilities use this simple technique for cutting pills into smaller portions.

However, this manual cutting technique is disadvantageous because it is slow and labor-intensive in that only one tablet can be cut at a time. Manual cutting of tablets may also be inaccurate and may result in incorrect dosage-units. Manual cutting may crush the tablet rather than cut cleanly through the tablet thereby wasting potentially costly medication. It is very desirable to eliminate as much human involvement in the tablet-cutting process as is possible.

As can be readily appreciated, the above-mentioned problems associated with the cutting of tablets are amplified in large-scale pharmacies, such as those found in institutional settings like hospitals or skilled nursing facilities. Such institutional settings should be ideal candidates for dispensing tablets having intermediate dosage-units of medication because of the needs of the patient base. Under present practice, the pharmacy which provides medication to these institutions usually takes the responsibility for cutting the conventional tablets into half-tablet forms each including an intermediate dosage-unit. Manual cutting of a large number of tablets is time consuming and inefficient for the reasons stated above. In addition, manual cutting of the tablets can be extremely complicated because, for example, up to 50 different tablet-form medications may need to be cut on a routine basis in quantities of greater than 100 each in order to fulfill the prescription requirements for these large facilities. The logistics of cutting these tablets can be formidable.

Another important disadvantage of manual tablet-cutting, particularly in pharmacies dispensing many different types of tablets, is that the pharmacist may become exposed to medication particles potentially causing injury to the pharmacist. In addition, the knife blade or hard surface may become coated with residue from the cut or crushed tablets potentially contaminating subsequently-cut tablets using the same equipment. Any cross-contamination could potentially result in injury to the patients.

Various manually-operated tablet-cutting or breaking devices are available for use by pharmacists or individuals. However, these devices typically rely on a blade or force-applying member to cut or break the tablet. These devices are not optimal for use in institutional settings because they are manually-operated and cut single tablets. These devices also are susceptible to tablet breakage and contamination.

It would be a significant improvement in the art to provide an automatic tablet-cutting device which would be capable of automatically cutting large quantities of tablets, including tablets having different shapes and sizes, which would cut these tablets in a reliable, accurate manner with reduced tablet waste, and which would be easy to clean and operate.

### Objects of the Invention

It is an object of the invention to provide an improved automatic tablet-cutting device and cutting method overcoming problems and shortcomings of the prior art.

Another object of the invention is to provide an improved automatic tablet-cutting device and cutting method which will cleanly cut tablets with minimal tablet breakage and, accordingly, minimal tablet waste.

It is also an object of the invention to provide an improved automatic tablet-cutting device and cutting method for use with a wide range of tablet shapes and sizes.

An additional object of the invention is to provide an improved automatic tablet-cutting device and cutting method for cutting tablets in a consistent, reliable manner.

A further object of the invention is to provide an improved automatic tablet-cutting device and cutting method for rapid and economical tablet cutting.

An object of the invention is to provide an improved automatic tablet-cutting device and cutting method in which a tablet is aligned for cutting in a manner which results in minimized tablet waste.

Yet another object of the invention is to provide an improved automatic tablet-cutting device and cutting method for cutting tablets into equal portions, including into equal fractional portions, such as halves, quarters and eighths.

An additional object of the invention is to provide an improved automatic tablet-cutting device and cutting method for automatically minimizing tablet particulates within the device.

Still another object of the invention is to provide an improved automatic tablet-cutting device which can be easily cleaned of tablet particulates.

Another object of the invention is to provide an improved automatic tablet-cutting device and cutting method in which the device is compact and easy to operate with no requirement for human involvement in the cutting process.

A further object of the invention is to provide an improved automatic tablet-cutting device and cutting method in which the cutting apparatus may be easily replaced.

Yet another object of the invention is to provide an improved automatic tablet-cutting device and cutting method in which the tablets to be cut are stored in containers which may be removably attached to the device.

How these and other objects are accomplished will be apparent from the description and illustration of the exemplary embodiments of the invention which follow.

### Description of the Drawings

FIGURE 1 is a "Drug Classification Table" showing exemplary tablet shapes.

FIGURES 2A and 2B are enlarged perspective views of exemplary oval-shaped and disk-shaped tablets of FIGURE 1.

FIGURES 3A and 3B are enlarged perspective views of exemplary ball-shaped and coated-form tablets of FIGURE 1.

FIGURE 4 is a perspective view of an exemplary automatic tablet-cutting device according to the invention.

FIGURE 5 is a further perspective view of the exemplary automatic tablet-cutting device of FIGURE 4 showing exemplary tablet guide, alignment, and cutter apparatus.

FIGURE 6 is a partial schematic top plan view showing portions of the exemplary tablet guide and alignment apparatus of FIGURE 4.

FIGURE 7 is a further partial schematic diagram showing portions of the exemplary tablet guide, alignment and cutter apparatus of FIGURE 6.

FIGURE 8 is a sectional view taken along section line 8-8 of FIGURE 6.

FIGURE 9 is a further enlarged sectional view of a portion of FIGURE 8 showing a tablet in a first, pre-alignment position.

FIGURE 10 is a further enlarged schematic diagram of a portion of FIGURE 8 in a second position showing alignment in one direction by an alignment member.

FIGURE 10A is a schematic diagram showing a side elevation of an exemplary wedge-shaped alignment cavity and related structure of the embodiment of FIGURE 10.

FIGURE 11 is a schematic top plan view showing exemplary tablet-alignment apparatus of FIGURE 8 in a final alignment position following alignment in a second direction by alignment elements.

FIGURE 12 is an enlarged schematic side elevation diagram showing portions of the exemplary tablet guide, alignment and cutter apparatus of FIGURE 8 and an aligned tablet in a cutting position during cutting.

FIGURE 13 is a partial sectional view taken along line 13-13 of FIGURE 12.

FIGURE 14 is an enlarged partial schematic side elevation diagram showing exemplary tablet cutter and alignment member of FIGURE 12.

FIGURE 15 is a partial schematic side elevation diagram showing exemplary tablet guide, alignment, and cutter apparatus of a second embodiment of the invention in a first, pre-alignment, position.

FIGURE 16 is a further partial schematic side elevation diagram showing exemplary tablet guide, alignment and cutter apparatus of FIGURE 15.

FIGURE 17 is a further partial schematic side elevation diagram showing exemplary tablet guide, alignment and cutter apparatus of FIGURE 15 in a second position showing alignment in a first direction by an alignment member.

FIGURE 17A is a schematic diagram showing a side elevation of an exemplary wedge-shaped alignment cavity and related structure of the embodiment of FIGURE 17.

FIGURE 18 is a further partial schematic side elevation diagram showing exemplary tablet guide, alignment and cutter apparatus of FIGURE 15 in a position for final alignment and cutting.

FIGURE 19 is a partial sectional view taken along line 19-19 of FIGURE 18.

FIGURE 20 is an enlarged schematic side elevation diagram showing portions of the exemplary tablet guide, alignment and cutter apparatus of FIGURE 18 and an aligned tablet in a cutting position immediately following cutting.

FIGURE 21 is a partial schematic top plan view of an exemplary ejection apparatus in a ready position.

FIGURE 22 is a partial schematic top plan view of an exemplary ejection apparatus in a tablet-ejection position.

FIGURE 23 is a schematic top plan diagram of a vacuum apparatus suitable for use in connection with the invention.

FIGURES 24A-24F are schematic side elevation diagrams showing alternative alignment apparatus for use in connection with the invention.

FIGURES 25A-25F are schematic side elevation diagrams showing further alternative alignment apparatus for use in connection with the invention.

### Summary of the Invention

The invention is an automatic tablet-cutting device for use in cutting tablets and other small objects preferably into portions having equal volumes and a method of automatic cutting. The invention will have particular utility in hospitals, formularies, skilled nursing facilities and any other setting wherein automatic cutting of tablets is desired.

Generally, the invention comprises an automatic tablet-cutting device comprising tablet-guide, tablet-alignment and tablet-cutting apparatus. Such apparatus are positioned in a suitable housing and are controlled by suitable automatic control apparatus.

The preferred tablet-guide apparatus has a tablet-receiving portion and a tablet-guide portion along which a tablet is directed from the receiving portion to the cutter apparatus. The tablet-guide portion preferably includes a guide surface in contact with the tablet. The guide surface is preferably inclined to permit a tablet to move along the surface under the influence of gravity. The tablet-guide may be configured in any suitable manner and may comprise a flat surface or may comprise plural surface portions such that the guide surface has a "v-shaped" cross section. Provision of a v-shaped cross section is particularly preferred because such cross section serves to orient the tablet for alignment.

The preferred tablet-alignment apparatus is positioned with respect to the tablet-guide and includes an alignment member and at least one alignment element. The alignment member orients the tablet with a primary axis parallel to a first direction and the alignment element, or elements, move the oriented tablet to a fully- aligned position. The alignment member also holds the aligned tablet for cutting by the cutter apparatus.

The alignment member has a tablet-contact surface spaced apart from the tablet-guide to form a cavity with a decreasing cross-section therebetween. The tablet-contact surface and tablet-guide coact to orient the tablet with the primary axis parallel to the first direction. Preferably, the alignment member is movably mounted between at least an alignment position in which the tablet-contact surface and tablet-guide surfaces coact to orient the tablet, and a further position in which the tablet-contact surface is positioned out of contact with the tablet. Rotational or reciprocal movement of the alignment member is preferred.

The alignment member may be configured for use in alternative embodiments of the invention. A particularly preferred form of the alignment member is provided for use with the tablet-guide having a v-shaped cross section. The alignment member preferred for use in such embodiment comprises a support member movably mounted between the alignment and out-of-contact positions. Such alignment member includes a body pivotally mounted on the support member. The tablet-contact surface is provided along a surface of the body facing the tablet-guide. The body further has an upstream end, a downstream end and an attachment structure (such as a hinge) movably mounting the body to the support member along the body upstream end. In this form of the invention, biasing apparatus is provided to act against the body to urge the tablet-contact surface toward the tablet-guide surface so that, in the alignment position, the tablet is contacted for alignment by the tablet-contact surface and tablet-guide surfaces.

Further alternative alignment member structures are disclosed including an alignment structure comprising a cylindrically-shaped body and a concentrically-mounted member. In this embodiment, the body is mounted for rotation in a first direction and has a circumferential surface comprising the tablet-contact surface. The body is mounted so that body rotation in the first direction moves a tablet positioned against the surface in the cavity thereby orienting the tablet. The member of the alternative embodiment is preferably mounted for movement in a second direction and is positioned concentrically around at least a portion of the tablet-contact surface. The member is provided with a tablet-contact portion. The member is mounted so that rotation of such member in the second direction moves the tablet-contact portion against the aligned tablet holding the aligned tablet and moving the tablet against the cutter apparatus for cutting.

Yet another alternative alignment member structure comprises a cylindrically-shaped body mounted for bi-directional rotation in first and second directions. In this further embodiment, the body has a circumferential surface which forms the tablet-contact surface. A cut-out portion is provided in the body along the tablet-contact surface. The cut-out portion is defined by first and second surfaces which form a tablet-receiving groove in the body. Rotation of the body in the first direction moves a tablet positioned against the tablet-contact surface in the cavity thereby orienting the tablet. Rotation of the body in the second direction positions the oriented tablet in the groove with the first and second surfaces coacting to hold the aligned tablet and move the tablet against the cutter apparatus for cutting. The coacting surfaces serve to further orient the tablet for cutting.

The at least one alignment element of the alignment apparatus is movably mounted and is provided to contact the oriented tablet and move the tablet into alignment for cutting. The aligned tablet is cut at a cutting position. It is most highly preferred that the alignment apparatus includes first and second alignment elements having alignment portions which contact the tablet. Each element is mounted for movement between a position in which the element is out of contact with the tablet and a further position in which the elements synchronously move together to contact the oriented tablet and move the tablet into alignment for cutting. The alignment portions need not move in an identical manner at all times. For example, prior to alignment, one portion could be positioned out of the tablet-guide while the other portion is positioned in the tablet-guide to block tablet movement.

In the highly preferred embodiment including the tablet-guide with the v-shaped cross section and reciprocally-mounted alignment member, the second tablet-alignment element is mounted for movement with an alignment portion at a position along the tablet-guide downstream of the cutter apparatus and the first tablet-alignment element is mounted for movement with an alignment portion at a position along the tablet-guide upstream of the cutter apparatus. Actuator apparatus is provided to move the first and second tablet-alignment elements between at least a first position in which the second tablet-alignment element alignment portion is positioned in the guide and the first tablet-alignment element alignment portion is positioned out of the guide, a second position in which the first and second tablet-alignment element alignment portions are synchronously move together along the tablet-guide axis to contact a tablet positioned between said portions thereby aligning the oriented tablet for cutting at the cutting position, and a third position in which at least the second tablet-alignment element portion is positioned to avoid engagement with a tablet on the guide surface.

The tablet-cutter apparatus of the invention is positioned to contact the aligned tablet and cut the tablet substantially in half. A highly preferred form of the cutting apparatus comprises a rotary saw blade mounted for rotational movement to cut an aligned tablet and a motor operatively connected to the blade for rotating the blade. In the highly preferred embodiment including the tablet-guide with the v-shaped cross section and reciprocally-mounted alignment member, the cutter apparatus cutting surface has an axis transverse to a tablet-guide axis and the cutting surface is movable between a first position in which the cutting surface is positioned out of contact with the tablet and a second position in which the cutting surface cuts the tablet substantially in half. A biasing apparatus may be positioned with respect to the tablet in the tablet-guide to provide a force against the tablet so that the tablet is firmly, but not crushingly, held for cutting by the cutter apparatus.

The device may include a vacuum apparatus for removing cut-tablet particulates (i.e. dust) from the device. Such a vacuum apparatus may include a fan or other air-flow apparatus positioned to move particulate-containing air away from the cutter apparatus and through at least one filter having at least one surface for removing the cut-tablet particles from the air.

The device may further include an ejector apparatus provided to eject cut-tablet portions from the cutter apparatus following cutting.

The automatic tablet-cutting method according to the invention includes the steps of positioning the tablet along a tablet-guide, automatically orienting the tablet into an orientation in which a tablet first primary axis is substantially parallel to a first direction and automatically moving the tablet in such orientation along the tablet-guide into alignment for cutting. The aligned tablet is then cut at a cutting position. Additional steps may be provided including those disclosed herein.

### Detailed Description of Preferred Embodiments

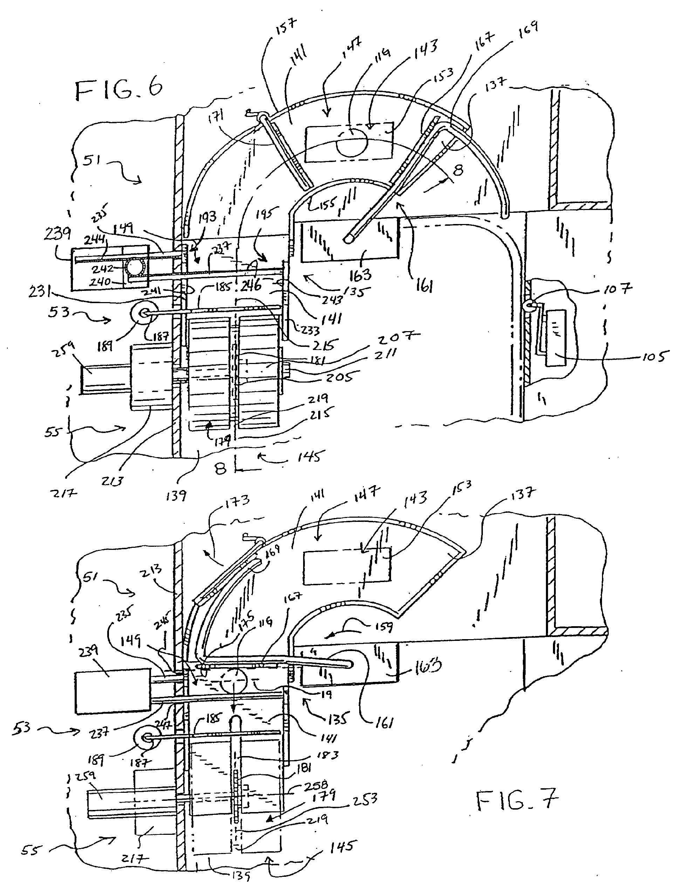

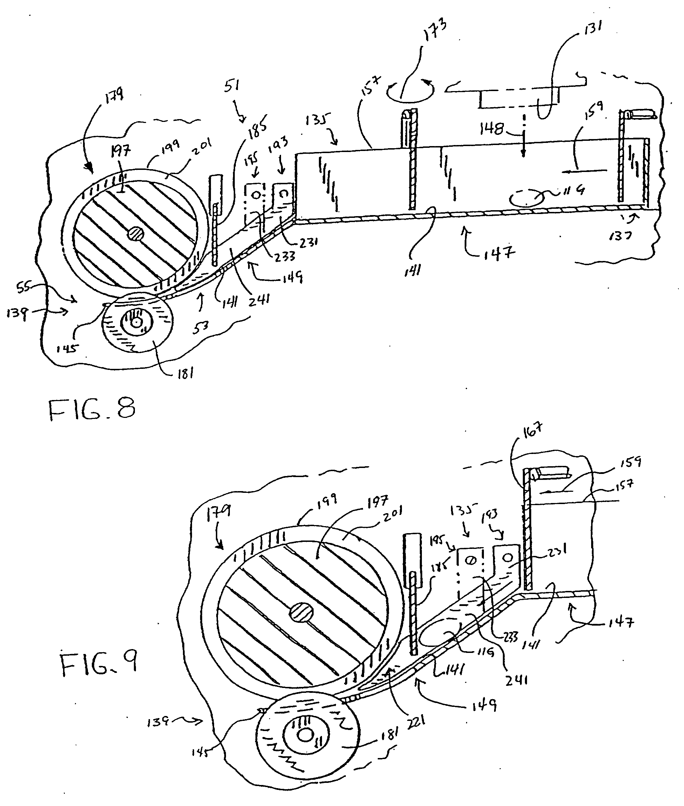

Embodiments of exemplary automatic tablet-cutting apparatus in accordance with the invention are designated as 10-10'" and are shown in Figures 4-25. Apparatus 10-10'" are intended for use in automatically cutting solid tablets into tablet portions having predetermined ratios. Most preferably, the tablets are cut into tablet portions having substantially equal volumes, that is, the tablets are cut substantially in half. Tablets which may be cut with the invention may include orally-ingested tablets such as oral solid medication, vitamins, supplements and the like. The invention is provided to efficiently and rapidly cut a wide range of tablet shapes and sizes automatically and without need for human intervention in the cutting process.

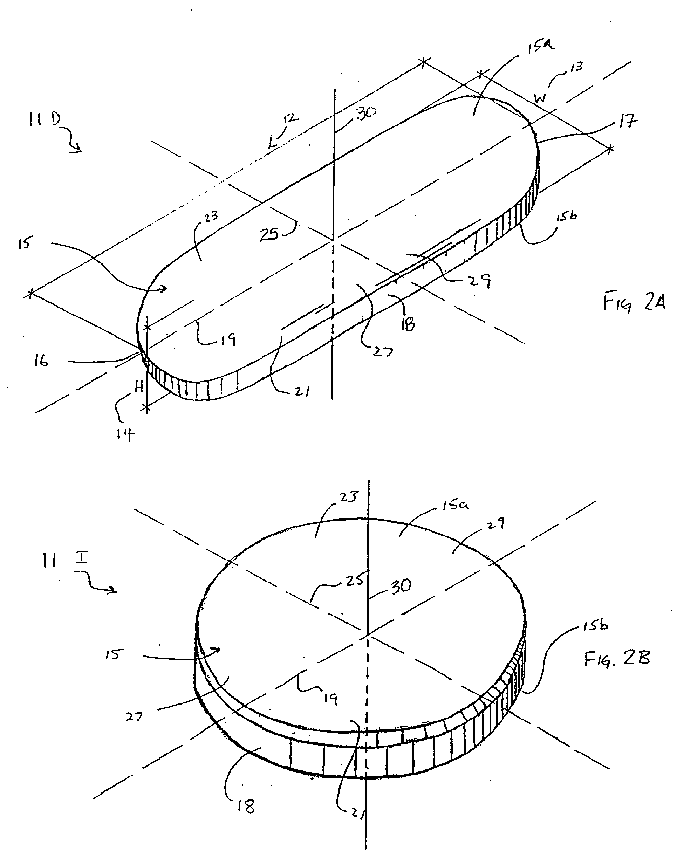

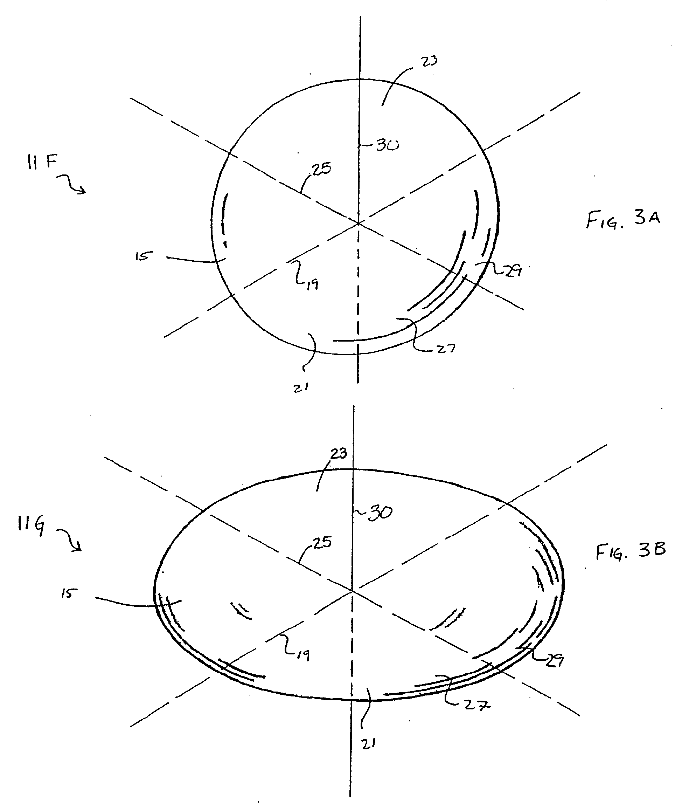

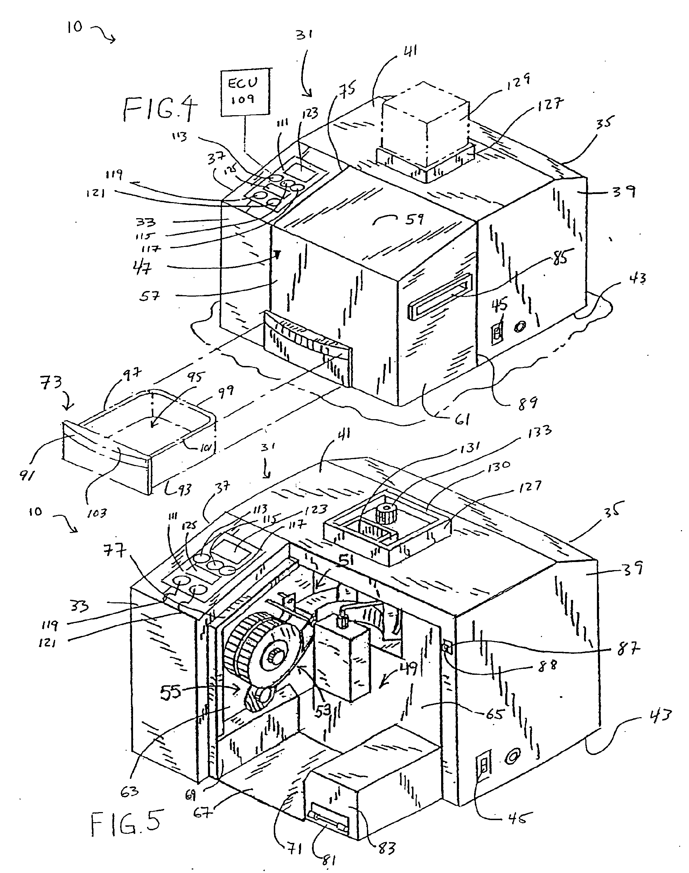

Before describing the invention in further detail, it is useful to understand certain aspects of tablet geometry. Such tablet geometry will be explained with reference to the representative tablet forms 11A through 11P shown generally in Figure 1 and, to the enlarged oval 11D, ball 11F, coated 11G and disk-shaped 11I tablets of Figures 2A-B and 3A-B. While the explanation will focus on Figures 2A-B and 3A-B, it will be readily appreciated that the aspects of tablet geometry referenced with respect to the oval 11D, ball 11F, coated 11G and disk-shaped 11I tablets shown therein are equally applicable to each of the tablets 11A-11P shown more generally in Figure 1.

While the invention will automatically cut solid tablets in the form of tablets 11A-C, it should be noted that the invention is not intended for use with tablets comprising an outer body encapsulating loose medication particles or liquid-type medications. As will be appreciated, such tablets cannot be cut into discrete tablet portions because medication within the body would escape. The discussion of tablets 11A-11P which follows assumes that such tablets are solid.

Referring then to Figures 1-3 each tablet 11A-11P comprises one or more active constituents together with an inert binder compound. The active constituent is provided in a predetermined concentration and is distributed evenly throughout the binder.

The oval-shaped tablet 11D of Figure 2A representatively shows that each tablet 11A-11P is a three dimensional object including a length dimension 12, a width dimension 13 and a height (or thickness) dimension 14. Each dimension will vary depending on the specific size of the tablet. Tablet sizes typically range from about 6-25mm (length) by 3-20mm (width) by 3-12mm (height). Each tablet 11A-11P is a solid mass with a tablet volume defined by dimensions 12-14.

Each tablet 11A-11P has a surface 15. Elongate tablets (such as tablets 11A-11E, 11M-11P) have first and second ends 16, 17. Certain other tablets (such as tablets 11D,11E, 11G, 11I-11N) may include an edge 18 and top and bottom surfaces 15a and 15b.

Each tablet 11A-11P is characterized by "primary axes" which are useful in alignment of the tablet for cutting as described in detail below. Each tablet 11A-11P has a first primary axis 19 which may define a length dimension 12 of the tablet. A plane coincident to primary axis 19 bisects tablet 11A-11P and divides each tablet 11A-11P into a first portion 21 and a second portion 23, each portion having an equal volume. Each tablet 11A-11P also has a second primary axis 25 which is generally perpendicular to the first primary axis 19 and may define a width dimension 13 of the tablet. A plane coincident to second primary axis 25 also bisects tablet 11A-11P dividing each such tablet into tablet portions 27 and 29 each of which also has an equal volume. A further primary axis 30, may define a height dimension 14 of the tablet.

The respective axial length, width or height of the tablet along primary axes 19, 25, 30 need not be identical and will vary in axial length based on the size and shape of the particular tablet. By way of illustration, oval-shaped tablet 11D (Figure 2A) primary axes 19, 25 each have a different axial length while the primary axes 19, 25 of disk-shaped tablet 11I (Figure 2B) each comprise a diameter of disk-shaped tablet 11I and have identical axial lengths. The axes 19, 25 and 30 of spherical tablet 11F each have identical lengths. Thus, the axial length of the tablet along primary axes 19, 25 is not critical provided that each primary axis 19, 25 serves to divide each tablet 11A-11P into equal tablet portions.

A first embodiment 10 of the invention will now be described with respect to Figures 4-14. Referring first to Figures 4 and 5, apparatus 10 includes a housing 31 which may be of any suitable configuration based on the operator's requirements. The housing 31 configuration shown in Figures 4 and 5 is of a type suitable for use on a desktop in a formulary, such as a formulary found in a drug store pharmacy, hospital or skilled nursing care facility. Housing 31 includes front and rear walls 33, 35, sidewalls 37, 39, top wall 41 and bottom wall 43. Housing 31 may be made of any suitable material. Formed sheet metal is a particularly useful material for use in fabricating the walls comprising housing 31.

Electrical power to apparatus 10 is controlled by on/off switch 45 provided in sidewall 39. The electrical/mechanical apparatus of apparatus 10 may be configured to operate on any available form of electrical power, for example the 120 volt, 15 ampere power typically available in the United States.

Removable access panel 47 is provided to close compartment 49. The tablet-guide 51, tablet-alignment 53 and tablet-cutter 55 apparatus are located in compartment 49 to move, align and cut the tablets. Panel 47 has a front wall 57, top wall 59 and a side wall 61 which are coextensive with housing front 33, top 41 and sidewall 39 when panel 47 is in place on housing 31.

In the example of Figure 5, compartment 49 is defined by compartment side 63, rear 65 and bottom 67 walls and by an inner wall surface (not shown) of panel 47 when panel 47 is in place on housing 31. Wall portions 69, 71 define a space therebetween for receiving drawer 73. Such compartment 49 walls are preferably made of formed sheet metal, such as stainless steel which is a desirable material because it can be easily formed, is sturdy and can be easily cleaned.

Panel 47 may be removably secured to housing 31 by any suitable means. In the example shown, panel 47 is supported along panel end 75 by shoulder 77 and along panel front wall 57 by engagement of a downwardly extending hook or latch (not shown) on the panel inner surface which removably mates with pin 81 mounted along wall portion 83. Handle 85 is provided in panel side wall 61 to aid the operator in gripping panel 47. Such an arrangement permits panel 47 to be removed simply by gripping handle 85 and lifting panel 47 in an upward direction. Other panel securing means, such as one or more hinges (not shown) along housing sidewall 39 and panel sidewall 61 may be used to movably secure panel 47 to housing 31. Removal of panel 47 permits ready access to compartment 49 for cleaning and repair of the components therein.

Interlock switch 87 may be provided to contact panel 47 along an end portion 89 of panel sidewall 61 when panel 47 is in place in housing 31. Switch 87 includes a contact member 88 which engages panel end portion 89 to close switch 87 permitting electrical power to energize the tablet-alignment 53 and cutter apparatus 55. Removal of panel 47 opens switch 87 to de-energize the tablet-alignment 53 and cutter apparatus 55 preventing possible injury to the operator.

Drawer 73 is provided to receive cut tablet portions following cutting by the cutter apparatus 55. Drawer 73 is removably positioned in an opening (not shown) in front wall 57 of access panel 47 and within compartment 49 between wall portions 69 and 71. Drawer 73 includes a handle 91, a bottom wall 93 and a tablet-receiving opening 95 formed by walls 97-103.

As shown in the cut away portion of Figure 6, a second interlock switch 105 may be provided with contact member 107 in position to engage drawer sidewall 99 such that switch 105 is closed permitting electrical power to energize the alignment and cutter apparatus 53, 55 when drawer 73 is in place. Switch 105 is opened and electrical power to tablet-alignment 53 and cutter apparatus 55 is interrupted when drawer 73 is removed.

Referring to Figure 4, an electronic control unit ("ECU") 109, for example a programmed microprocessor, is provided to control operation of apparatus 10. ECU 109 firmware includes a series of programmed instructions resulting in a set of coordinated actions by the actuators, motors and other operative components of device 10 as set forth in detail below. ECU 109 generates command signals to the operative components of apparatus 10 based on timing, sensors or other appropriate input information.

A control panel 111 is provided to permit the operator to interface with ECU 109 and to provide information and commands to ECU 109. Such input information may include patient prescription order information including, for example, information identifying the patient's name, the type and quantity of tablets to be cut, patient billing information, National Drug Code ("NDC") information and any other desired information relating to the patient prescription order. Alternatively, input information relating to processing of tablets generally and without regard to any specific patient could be provided to ECU 109. Such input information may be desired in circumstances where the operator wishes to cut a predetermined number of tablets in order to maintain an inventory of such cut tablets. Some or all of this information may be stored in memory in ECU 109 or at a remote computer (not shown). Input keys 113-121 are provided for the operator to input information to ECU 109. Information displays 123 and 125, for example liquid crystal displays, are provided to present information to the operator.

A canister support base 127 is provided in housing top wall 41. Base 127 removably supports a tablet canister 129 which is represented by the dotted lines in Figure 4. Canister 129 is provided to store and dispense tablets, such as tablets 11A-11P, in bulk form. Bulk form means that the tablets are in a loose form and are not prepackaged. Avoidance of pre-packaging of the tablets reduces costs associated with any packaging step and makes it easier to handle the tablets. Canister 129 includes mounting structure (not shown) configuring canister 129 to be removably supported on base 127. Such supporting structure could include, for example, posts (not shown) projecting from a bottom side of canister 129 keyed to mate with walls 130 of canister base 127.

The desired canister, such as canister 129, is taken from a storage location and is placed on base 127 for dispensing of tablets from such canister into apparatus 10. It is envisioned that apparatus 10 will be used with a plurality of such canisters (i.e., canister 129), each canister containing a unique tablet type stored in bulk form. Such an arrangement would permit the operator to store many different types of tablets, each in a different canister, and to use a single apparatus 10 to cut tablets discharged from such canisters. The canisters could also be used with automated dispensing machines that dispense and package tablets according to patient prescription orders but do not necessarily cut the tablets thereby advantageously providing the operator with a common dispensing canister which could be used with different types of tablet-processing apparatus. The ATC 212™ pharmacy automation system sold by AutoMed Technologies, Inc. of Vernon Hills, Illinois is an example of a system which dispenses tablets from canisters, such as canister 129, in order to fill patient prescription orders.

One type of tablet (i.e., one type of tablets11A-11P) may be dispensed from each canister 129 in any suitable manner. Canister 129 may be provided with a rotatable comb (not shown) calibrated to the shape and size of the tablet type to be dispensed from a bottom opening (not shown) in registry with opening 131 in base 127 when canister 129 is removably attached to base 127. The rotatable comb is linked to a canister gear (not shown) which meshes with gear 133 extending from base 127. Gear 133 is rotated by a motor (not shown) within housing 31 under the control of ECU 109 and rotation of gear 133 causes co-rotation of the comb. As the comb rotates, tablets are metered one after the other from canister 129 through opening 131 in base 127. One tablet is metered out for each tablet-cutting cycle.

Suitable tablet-counting apparatus, such as a photo-electric system (not shown) may be provided across opening 131. Such a photo-electric system includes an emitter and receiver positioned so that the emitter light beam is broken each time a tablet passes opening 131. A count is registered by the ECU 109 each time a tablet breaks the light beam. The motor rotating gear 133 is stopped by ECU 109 once the desired number of tablets have been dispensed from canister 129.

It should be noted that canister 129 is a preferred structure for use in automatically metering tablets into apparatus 10. Other types of apparatus provided to introduce tablets into the apparatus 10 may be used in accordance with the invention. It is also possible that an operator could manually introduce tablets into apparatus 10 by manually dropping a tablet through opening 131.

Figures 5-13 illustrate the preferred tablet-guide 51, tablet-alignment 53 and tablet-cutter 55 apparatus of the invention. Referring first to tablet-guide apparatus 51, such structure is provided to direct a tablet in apparatus 10 to the alignment and tablet-cutter apparatus 53, 55. Tablet-guide 51 may also direct cut tablet portions to a collection area, such as drawer 73, following cutting.

Referring specifically to Figures 6-8, tablet-guide apparatus 51 includes a tablet-guide 135 which has a first, upstream, end 137 a second, downstream, end 139 and a guide surface 141 therebetween. Tablet-guide 135 further includes a tablet-receiving portion 143 provided to receive a tablet into tablet-guide 135. Tablet-receiving portion 143 may or may not be co-extensive with upstream end 137. As shown in Figures 6 and 7, tablet-receiving portion 143 is located at a position downstream of end 137. Tablet-guide 135 is provided to direct a tablet, such as coated-form tablet 11G of Figure 1, from tablet-receiving portion 143 to the cutter apparatus 55. Tablet-guide 135 may also include a tablet-discharge portion 145 located downstream of cutter apparatus 55. Cut tablet portions are discharged from tablet-discharge portion 145 to a suitable location, such as drawer 73.

As shown best in Figures 6-8, tablet-guide 135 of the first embodiment has a first portion 147 which is a generally horizontal upper guide portion and a second portion 149 which is a lower inclined guide portion located downstream of upper tablet-guide portion 147. In top plan views (Figures 6-7), the guide surface 141 along upper tablet-guide portion 147 is an arcuately-shaped, flat surface. Tablet 11G is introduced into tablet-receiving portion 143 of upper tablet-guide portion 147 from opening 131 in the direction of arrow 148 (Figure 8). An energy-absorbing member 153, for example a flexible wire mesh screen or polymeric foam cushion, may be provided along guide surface 141 at tablet-receiving portion 143. Member 153 is positioned so that tablet 11G falls onto member 153 preventing tablet 11G from breaking when it drops onto the upper tablet-guide portion 147 from opening 131.

Arcuate inner and outer walls 155, 157 are provided along upper tablet-guide portion 147 to limit tablet 11G movement and direct tablet 11G toward the inclined lower tablet-guide portion 149 in the direction of arrow 159 (Figure 7). An arm 161 is provided to contact tablet 11G and to urge tablet 11G toward inclined lower tablet-guide portion 149. Arm 161 is coupled at a first end (not shown) to a motor (not shown) positioned in a housing 163. In response to an appropriate signal from ECU 109, the motor moves arm 161 in the direction of arrow 159 between a first position shown in Figure 6 and a second position shown in Figure 7 thereby moving tablet 11G toward inclined lower tablet-guide portion 149.

Arm 161 includes a tablet-contact surface 167 and follower 169. Surface 167 is preferably made of a low-friction material such as stainless steel or plastic. Acetal, nylon or ABS plastic are suitable plastic materials for use as surface 167. Follower 169 is provided to ensure that the gate 171 stays open when arm 161 is in its extended position as shown in Figure 7.

Unpowered gate 171 may optionally be provided to contact tablet 11G as the tablet is pushed toward lower tablet-guide portion 149 by arm 161. Gate 171 is pivotally mounted with respect to tablet-receiving portion 147 so that gate 171 pivots away from tablet 11G in the directions indicated by arrow 173 (Figures 7 and 8). Frictional contact between tablet 11G and gate 171 and movement of tablet 11G across arcuately-shaped tablet-guide surface portion 141 begins to orient tablet 11G so that tablet primary axis 19 is parallel to an axis 175 along surface 167 of arm 161 and is generally perpendicular to a tablet-guide axis 215. By way of further example, oval-shaped tablet 11D would begin to align with primary axis 19 generally parallel with axis 175 and generally perpendicular to tablet-guide axis 215.

As shown in the embodiment of Figures 7-12, the guide surface 141 along lower tablet-guide portion 149 is generally flat along the section indicated by line 8-8 and is inclined at any suitable angle to horizontal sufficient to move tablets therealong by means of gravity with an angle of about 45 ° being a preferred angle. Lower tablet-guide portion 149 is preferably configured to follow the circumferential surface 199 of alignment member 179. The "J-shaped" profile shown in the side elevations of Figures 8-10 and 12 is a particularly preferred configuration for lower tablet-guide portion 149 as the downstream portion essentially follows the surface 199 of alignment member 179.

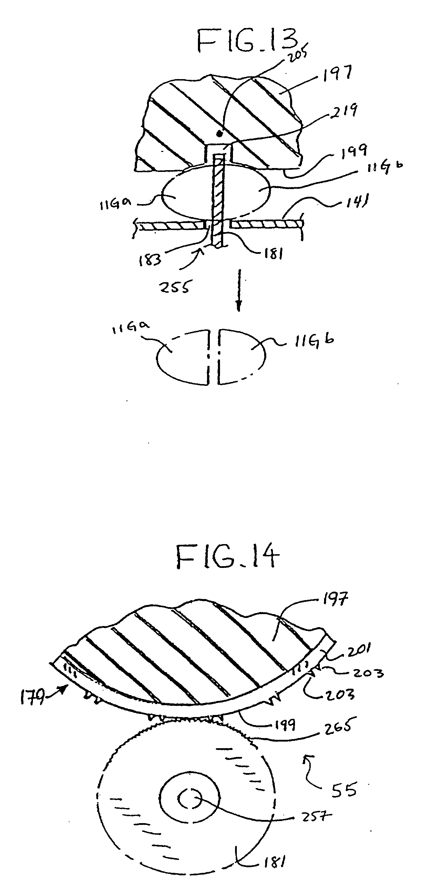

In the embodiment shown in Figures 4-12, lower tablet-guide portion 149 is made of a low-friction, resilient material such as stainless steel sheet metal. Such low friction stainless steel material permits tablet 11G to slide freely down inclined lower tablet-guide portion 149 and toward cutter apparatus 55. The resilient stainless steel sheet acts as an internal spring flexing in the direction of arrow 182 (Figure 12) when a tablet is moved to the cutting position 255. This structure permits the lower tablet-guide portion 149 to bias tablet 11G firmly, but not crushingly, against alignment member 179 so that tablet 11G is held for cutting by a rotary saw blade 181 as alignment member 179 rotates. An opening, such as slit 183 (Figure 13), may be provided in lower tablet-guide portion 149 through which blade 181 extends. Slit 183 defines tablet-cutting position 255 along tablet-guide 135.

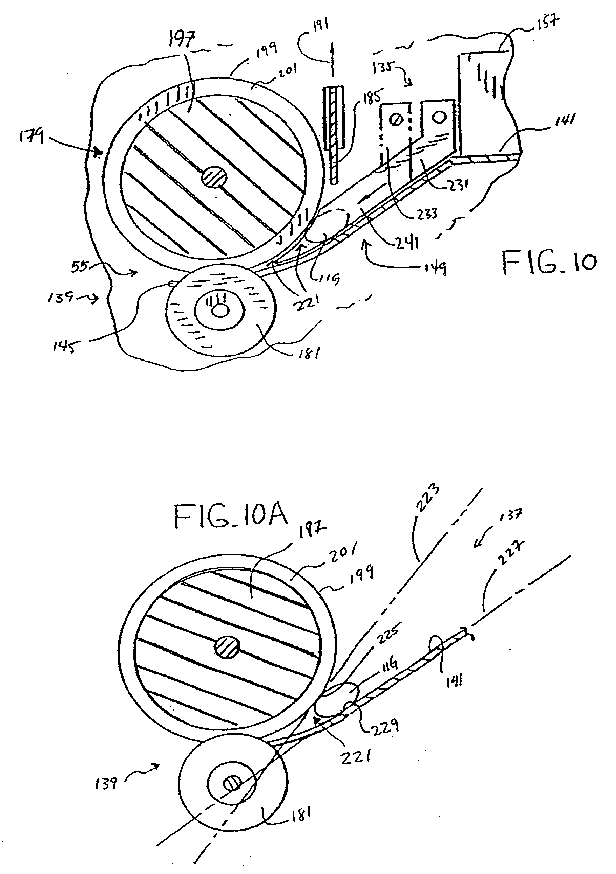

Referring to Figures 6-7, a gate 185 is provided along lower tablet-guide portion 149 to stop downward sliding movement of tablet 11G along lower tablet-guide portion 149 prior to alignment and cutting. Gate 185 is coupled at a first end 187 to a linear actuator 189 for up and down movement toward and away from the direction of arrow 191 (Figure 10). Actuator 189 is operatively controlled by ECU 109.

Considerable variation is possible with respect to the form of tablet-guide 135. For example, and as shown in Figures 6-13, surface 141 may be flat or may have other surface configurations, such as those described below with respect to the second embodiment 10'. Tablet-guide 135 may be of any length and width sufficient to support and align tablets 11A-11P moving therealong. Also by way of example, tablet-guide 135 could comprise a vertically-oriented guide (i.e., oriented 90° to horizontal) through which tablets 11A-11P fall in a directed manner toward cutter apparatus 55.

The alignment apparatus 53 of the first embodiment 10 will now be described with respect to Figures 4-14. Alignment apparatus 53 preferably includes both alignment member 179 and alignment elements 193, 195. Alignment member 179 is provided to orient a tablet, such as tablets 11A-11P, in a first direction with a primary axis 19 parallel to a first direction while alignment elements 193,195 are provided to align the oriented tablet, preferably in a second direction in which the tablet is aligned for cutting along tablet primary axis 25. Coaction of alignment member 179 and elements 193, 195 align the tablet 11A-11P for cutting along a plane coincident to the tablet primary axis, preferably into tablet portions each having an equal volume.

Alignment member 179 of the first embodiment 10 (Figures 5-14) comprises a drum-shaped body 197 having a tablet-contact surface 199 around the circumferential surface of body 197. Body 197 has a width dimension coextensive with the width dimension of tablet-guide surface 141 to ensure contact between body 197 and a tablet on tablet-guide 135. Preferably a tactile tablet-contact member 201 is concentrically-mounted around the circumferential surface of body 197. Member 201 is secured to body 197 by any suitable means, for example, by adhesive. Tablet-contact surface 199 is the outer circumferential surface of member 201 each portion of which is rotated to face tablet-guide surface 141 as body 197 is rotated. Member 201 may include projections, such as ribs 203 (Figure 14), along tablet-contact surface 199 to further improve contact between alignment member 179 and tablet 11G.

Body 197 has a body axis 205 and is mounted for rotational movement on rotatable shaft 207 in the direction of arrow 209 (Figure 12). Fastener 211 secures body 197 on shaft 207 for co-rotation of body 197 and shaft 207. Shaft 207 is journaled in wall 213 such that body axis 205 is parallel with tablet guide axis 215 and so that tablet-contact surface 199 is spaced closely across tablet-guide surface 141. Shaft 207 is rotatably coupled to a motor 217. In response to a signal from ECU 109, motor 217 rotates body 197 in the direction of arrow 209 shown in Figure 12. Motor 217 rotates body 197 shortly after gate 185 is raised and after a tablet, such as tablet 11G, contacts surface 199 for alignment. Rotation of body 197 is stopped after the tablet is cut.

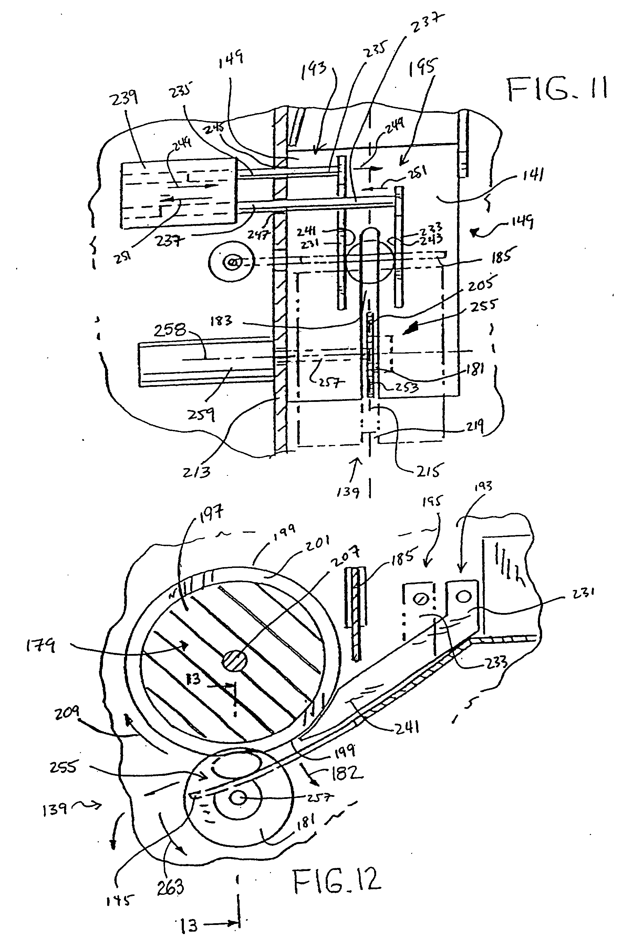

Body 197 may be made of any suitable rigid material, such as plastic or metal. Member 201 including tablet-contact surface 199 is preferably made of a high-friction, preferably tactile, material so that body 197 can positively contact tablet 11G confined between tablet-contact surface 199 and tablet-guide surface 141 and move tablet 11G toward cutter apparatus 55 and cut tablet portions 11Ga, 11Gb away from cutter apparatus 55. Figure 13 shows compression of preferred tactile member 201 as tablet 11G is positioned between tablet-contact surface 199 and tablet-guide surface 141. Ribs 203 further grip tablet 11G and urge tablet 11G toward blade 181. As best seen in Figures 11 and 13, annular slot 219 may be provided around the circumference of body 197 to permit blade 181 to extend into body 197 to ensure a complete cut of tablet 11G without damaging body 197.

An important aspect of the alignment apparatus 53 component of the invention is the wedge-shaped cavity 221 formed between alignment member 179 tablet-contact surface 199 and spaced across tablet-guide surface 141. Such cavity 221 provides an alignment position for the tablet. In this example, cavity 221 is provided to orient tablet 11G (or tablets 11A-11P) with a primary axis 19 parallel to a first direction, preferably in a direction parallel to blade rotary axis 258. In such a preferred example, primary axis 19 would further be perpendicular to body and tablet guide axes 205, 215 . Cavity 221 is defined in the side elevation shown in Figure 10A by a first tablet-contact plane 223 which is tangent to tablet-contact surface 199 at the point of contact 225 with tablet 11G and a second tablet-contact plane 227 tangent to the tablet-guide surface 141 at the point of contact 229 with tablet 11G. Cavity 221 has a decreasing cross section (i.e., in a direction from tablet-guide upstream end 137 toward downstream end 139) as shown in Figure 10A. As described in more detail below, coaction of surfaces 199 and 141 move tablet 11G orienting the tablet in the preferred first direction (i.e., with primary axis 19 parallel to rotary blade axis 258 and perpendicular to tablet-guide 215 axis).

As shown in Figures 6-12, alignment elements 193, 195 are provided to fully align the oriented tablet 11G, preferably so that second primary axis 25 is parallel to and aligned with, tablet-guide 215 and blade 253 axes. In the first embodiment 10, this movement is preferably in a second direction.

The first and second movable alignment elements 193, 195 are laterally disposed along lower tablet-guide portion 149. Each element 193, 195 consists of an elongate alignment portion 231, 233 coupled via a respective support arm 235, 237 to an actuator 239 operatively controlled by ECU 109. Actuator 239 is preferably a suitable force-limited actuator 239 known to those of skill in the art. For example, actuator 239 could consist of a torque-limited motor 240 directly coupled to toothed pinion 242 operatively meshed with corresponding teeth of racks 244, 246. Each alignment portion 231, 233 includes an alignment surface 241, 243 which is preferably flat as shown in Figure 11. Support arms 235, 237 extend through respective openings 245, 247 in wall 213 and actuator 239 is secured to an appropriate frame element (not shown) within housing 31.

Actuator 239 synchronously moves arms 235, 237 together in the direction of arrows 249, 251 in response to appropriate signals from ECU 109 and retracts arms 235, 237 in the direction opposite to arrows 249, 251. The pinion 242 and rack structure 244, 246 synchronously displaces each arm 235, 237 an identical linear distance one toward the other (i.e., in the direction of arrows 249, 251). Movement of arms 235, 237 and alignment portions 231, 233 toward the other is halted when alignment surfaces 241, 243 each contact tablet 11G located therebetween. Motor 240 is selected so that motor torque is inadequate to crush tablet 11G. Current increase in response to stoppage of arms 235, 237 stops motor 240.

Arms 235, 237 and alignment portions 231, 233 are mounted so that tablet primary axis 25 is in alignment with tablet axis 215 when movement of arms 235, 237 is halted by contact with the tablet 11G. Therefore, the identical synchronous movement of alignment portions 231, 233 toward each other fully aligns the oriented tablet 11G in cavity 221 at a fully aligned position.

Following completion of alignment, by elements 193, 195 arms 235, 237 retract (i.e., move away from the other in the opposite direction of arrows 249, 251) permitting the now fully aligned tablet 11G to be moved into contact with cutter apparatus 55 at a cutting position 255 as described in more detail below.

While use of two alignment elements 193, 195 is most preferred because the synchronous movement of one element toward the other ensures proper tablet alignment, it is envisioned that tablet-cutting devices could be developed using only a single movable alignment element provided to contact the tablet and move the tablet into alignment for cutting along a plane coincident to a primary axis. Moreover, any suitable motivator apparatus may be used to move elements 193, 195. For example, a motor in combination with a belt could be substituted for the pinion 242 and rack 244, 246 apparatus shown.

Cutter apparatus 55 of first embodiment 10 will now be described with respect to Figures 4-14. Cutter apparatus 55 is provided to contact and cut aligned tablet 11G. Preferably, the cutter apparatus 55 cuts tablet 11G along a plane coincident to the tablet primary axis, such as axis 19 or 25. Cutter apparatus 55 is positioned at cutting position 255 preferably along tablet-guide 135 at a location between tablet guide first and second ends 137, 139 and along slit 183. Cutter apparatus 55 preferably comprises a rotary saw blade 181 mounted on blade shaft 257 for co-rotation with shaft 257. Shaft 257 has a blade shaft rotary axis 258. Fastener 261 (for example a nut screwed onto unshown mating threads provided on shaft 257) is provided to hold blade 181 in place with respect to shaft 257. Blade 181 may be easily removed from shaft for replacement or cleaning by merely removing fastener 261 and sliding blade 181 off shaft 257.

A motor 259 is provided to rotate blade 181 in the direction of arrow 263 (Figure 12) in response to a signal from ECU 109. Shaft 257 may be the shaft of motor 259 or may be a separate shaft rotatably coupled to motor 259. Shaft 257 is journaled in wall 213 such that blade 181 extends through slit 183 in tablet-guide 135 and into annular slot 219 provided in body 197. Motor 259 is selected for high-speed rotation of blade 181. Rotation of blade 181 between about 3000-5000 rpm has been found to produce a clean cut of a tablet, such as tablets 11A-11P.

Blade 181 has a blade axis 253 and plural teeth 265. Blade 181 is oriented so that axis 253 is aligned with tablet-guide axis 215 and body axis 205. The cutting surface of blade 181 comprises teeth 265 which face body 197 and extend into slot 219 for cutting of tablet 11G when blade 181 is rotated. A rotary blade 181 is preferred because such a blade produces a clean, accurate cut with minimal tablet breakage and tablet waste.

While rotary blade 181 is highly preferred, other forms of cutting devices may be used consistent with the scope of the invention. For example, a reciprocating blade or band-type blade may be used to cut tablets in accordance with the invention. Moreover, blade 181 need not be mounted below tablet-guide 135. Blade 181 could be mounted above tablet-guide 135 or in any other orientation permitting cutting of the fully-aligned tablet 11G.

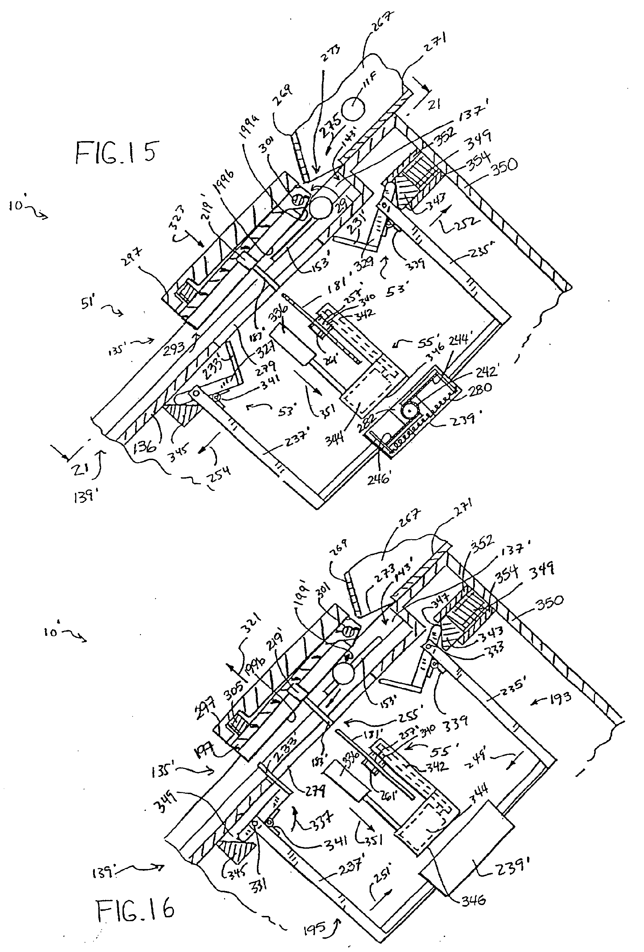

The structure of a second embodiment 10' of the invention will now be described with respect to Figures 15-20. Second embodiment 10' operates on the same principals as those described and illustrated with respect to first embodiment 10.

Embodiment 10' is intended for use in cutting tablets, such as tablets 11A-11P (Figures 1-3), into tablet portions having substantially equal volume. In Figures 15-20, device 10' is shown for operation with a ball-shaped (i.e., spherical) tablet 11F but could be used with any tablet shape, including those shown in Figure 1. As with embodiment 10, the device 10' of Figures 15-20 includes tablet-guide 51', tablet-alignment 53' and tablet-cutter 55' apparatus. Components 51'-55' of device 10' are preferably adapted for use in a housing identical to housing 31 including, without limitation, identical: wall structure 33-43; access panel structure 47, 57-61, 75, 85; compartment structure 49, 63-71, 81-83; drawer structure 73, 91-103; ECU structure 109; control panel structure 111-125; switches 45, 87, 105; and canister base structure 127, 130-133. Canisters identical to canister 129 described with respect to first embodiment 10 may be used to store and dispense tablets, such as tablets 11A-11P, in bulk form. Accordingly, the description and drawings of the components comprising embodiment 10 are adopted and incorporated by reference with respect to second embodiment 10'. The description of second embodiment 10' will be directed to the components internal to housing 31.

Referring now to Figures 15-20, those figures illustrate exemplary internal components 51'-55' of embodiment 10'. Referring first to tablet-guide apparatus 51', such apparatus includes a tablet-guide 135' with a first, upstream end 137' a second, downstream end 139' and a guide surface 141' positioned therebetween. Tablet-staging compartment 267 is optionally provided to receive a tablet 11F metered out from a canister, such as canister 129, through opening 131' in base 127' (Figures 4-5). Tablet-staging compartment 267 includes walls 269, 271 and opening 273 in communication with tablet-guide 135'. Tablet 11F moves through opening 273 in the direction of arrow 275. Tablet 11F is introduced into tablet-guide 135' at tablet-receiving portion 143' which, in the example shown, is positioned adjacent upstream end 137'. An energy-absorbing member 153', for example a flexible wire mesh screen or polymeric foam cushion, may again be positioned at tablet-receiving portion 143' to prevent tablet 11F from breaking.

Tablet-guide 135' is positioned downstream of tablet-receiving portion 143' and is provided to direct tablet 11F from tablet-receiving portion 143' to cutter apparatus 55' at a cutting position 255' along tablet-guide 135' and between first and second ends 137', 139'. Tablet-guide 135' may also include a tablet-discharge portion 145' located at a position downstream of cutter apparatus 55'. Cut tablet portions are discharged from tablet-discharge portion 145' to a suitable location, such as drawer 73. An elongate slit 183' may be provided in tablet-guide 135' through which the blade 181' of cutter apparatus 55' is received to cut tablet 11F. Slit 183' defines tablet-cutting position 255' along tablet-guide 135'.

Tablet-guide 135' of second embodiment 10' and bottom wall 271 portion of tablet-staging compartment 267 are each oriented at an angle of between about 40-50° to horizontal with an angle of about 45° being a preferred angle. Tablet-guide 135' utilizes gravity to move tablet 11F along guide surface 141' and does not require the separate upper and lower guide portions 147, 149 or tablet arm 161, or gate 185 structure optionally provided with respect to device 10.

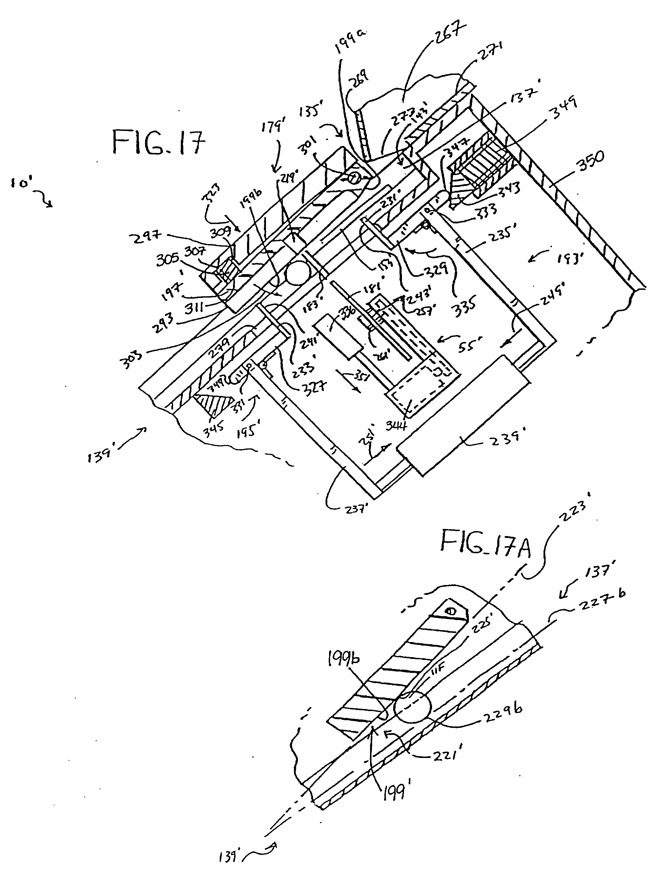

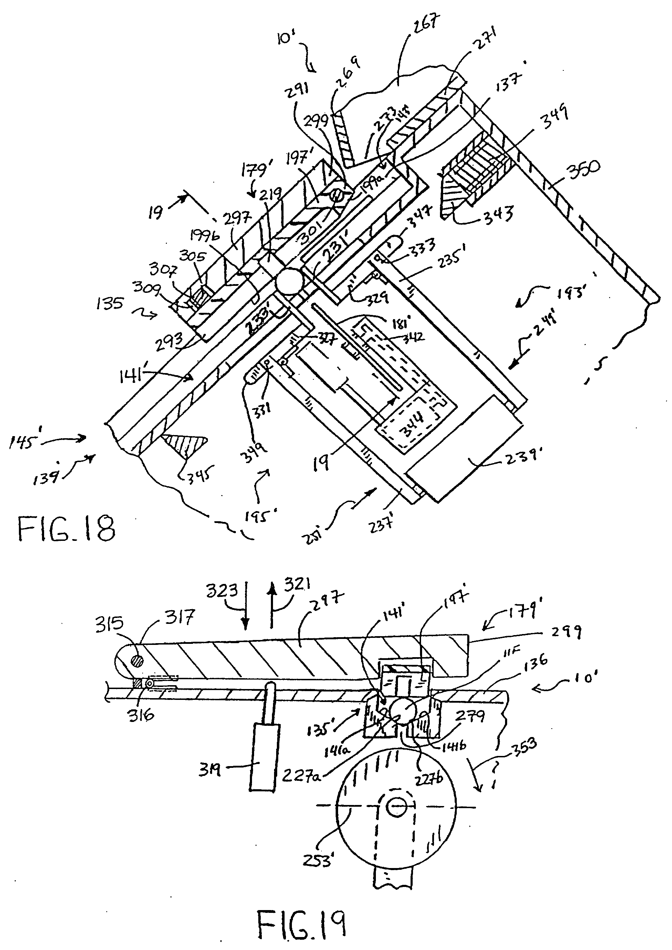

Referring to Figures 17-19, tablet-guide 135' is secured along a frame element 136 (Figure 19) and includes a tablet-guide surface 141' comprising plural surface portions 141a and 141b. Guide surface portions 141a and 141b are low-friction surfaces and are preferably flat along their entire length to permit unobstructed sliding movement of tablet 11F positioned against them. Surface portions 141a, 141b form a tablet-guide surface 141' with a generally "v-shaped" cross section, such as shown in Figure 19 which is a section taken along section line 19-19 of Figure 18. The generally v-shaped geometry of guide surfaces 141a and 141b serves to align tablet 11F so that tablet primary axis 19 is parallel with a first direction, in this example parallel to tablet-guide axis 215' as described in more detail below. Guide surfaces 141a and 141b are preferably positioned at an angle with respect to the other of between about 155-160°. Surface portions 141a, 141b may have other configurations, for example convexly-curved surfaces providing a v-shaped cross section resembling intersecting cylinders.

Tablet-guide 135' may be of any length and width sufficient to support and align tablets 11A-11P moving therealong. Tablet-guide portion 135' incorporating guide surface portions 141a and 141b is preferably made of a rigid or semi-rigid material which has low-friction properties and can be readily cleaned and to which debris and cut tablet particles will not easily adhere. Stainless steel is a material suitable for use in manufacture of tablet guide 135'.

A slot 279 is provided in tablet-guide 135' parallel to tablet-guide axis 215'. Alignment portions 231', 233' extend through slot 279 as described in more detail below.

As with embodiment 10, alignment apparatus 53' of second embodiment 10' preferably includes both alignment member 179' and alignment elements 193', 195'. Alignment member 179' is once again provided to orient tablet 11F so that primary axis 19 is parallel to a first direction while alignment elements 193', 195' are provided to move the oriented tablet 11F into full alignment for cutting at cutting position 255'. Alignment apparatus 53' aligns oriented tablet 11F for cutting along a plane coincident to tablet primary axis 25, preferably into tablet portions having equal volume.

Figures 15-20 illustrate an exemplary alignment member 179' which is shown positioned along tablet-guide surface 141'. Alignment member 179' includes a body 197' with a tablet-contact surface 199'. Body 197' is preferably elongate and of a generally rectangular shape. Body 197' has an upstream end 291, downstream end 293, a body axis 205' (Figures 19, 21 and 22) and tablet-contact surfaces 199a and 199b facing tablet-guide surface 141'. Exemplary tablet-contact surface 199b is flat as shown in Figures 17-20. Body 197' is preferably a one-piece member made of a material selected such that tablet-contact surface 199' has a low coefficient of friction thereby permitting tablet 11F to slide along surface 199' until stopped by coaction of surfaces 199' and 141a, 141b. Suitable low-friction materials include acetal, ABS plastic, polycarbonate, and stainless steel.

Body 197' is pivotally mounted to support 297 along a support first end 299. Body 197' upstream end 291 is pivotally attached to support 297 at hinge 301 so that body axis 205' is parallel to and vertically aligned with tablet-guide axis 215'. As shown in Figure 19, body 197' has a width dimension sufficient to ensure contact between body 197' and a tablet on tablet-guide 135'. Such arrangement positions body 197' substantially across tablet-guide 135' as shown in Figure 19. Hinge 301 permits body 197' downstream end 293 to move back and forth toward and away from tablet-guide 135' in the direction of arrow 303.

Spring 305 is positioned with one end 307 in cavity 309 and second end 311 positioned against body 197' to bias body 197' downstream end 293 and tablet-contact surface 199' toward tablet-guide 135' in the direction of arrow 303. Spring 305 is selected to exert sufficient force when energized so that tablet 11F in tablet-guide 135' is held firmly, but not crushingly, for alignment by alignment member 179' and for cutting by cutter apparatus 55'. The biasing function performed by tablet-guide 135 in embodiment 10 is performed by spring 305 in embodiment 10'. As shown in Figures 15-20 a slot 219' may be provided in body 197' to permit rotary blade 181' to extend into body 197' to ensure a complete cut of tablet 11F without damaging body 197'.

Support 297 may be mounted for movement in any suitable manner. For example, and as shown in Figure 19, support 297 may be pivotally mounted to a suitable frame element 136 within housing 31 through a hinge 315 provided at a support second end 317 opposite end 299. Suitable movement apparatus, such as a motor in combination with a gear or cam (not shown) or a linear actuator 319, is provided to act against support 297 and to move support 297 in the direction of arrows 321, as shown in Figure 16. Spring 316 is provided to move support 297 in the opposite direction as shown at arrow 323 in Figure 15. In response to appropriate signals from ECU 109, actuator 319 and spring 316 move support 297 (and body 197') between (a) a pre-alignment position (Figure 15), (b) tablet-alignment (Figures 16, 17, 17A), (c) tablet-cutting (Figures 18, 19, 20) and (d) tablet-release (not shown) positions. In the tablet-release position, support 297 is raised in the direction of arrow 321 positioning body 197' entirely out of contact with cut-tablet portions 11Fa, 11Fb in tablet-guide 135' permitting the cut tablet portions to be discharged from the cutting position 255'. The operation of support 297 between these positions is described in detail below.

Body 197' and support 297 can be configured and mounted in other manners. For example, support 297 could be mounted for translational up and down movement toward and away from tablet-guide 135'. Body 197' could be mounted for translational movement to support 297 rather than for the pivoting movement shown in Figures 15-19.

As with embodiment 10, alignment member 179' and tablet-guide surface 141' coact to form a wedge-shaped cavity 221' therebetween which is provided to orient tablet 11F by aligning a primary axis 19 in a first direction, in this example, parallel with tablet-guide axis 215'. Cavity 221' is formed when body 197' is moved by support 297 to the position shown in Figures 16, 17 and 17A. Such position is referred to as an alignment position, a position intermediate to the tablet-cutting and tablet-release positions described above. Cavity 221' is defined in a side elevation (Figure17A) by a first tablet-contact plane 223' which is tangent to tablet-contact surface 199' at the point of contact 225' with tablet 11F and by second and third tablet-contact planes 227a and 227b tangent to respective tablet-guide surfaces 141a, 141b at the respective points of contact 229a, 229b with tablet 11F. Cavity 221' has a decreasing cross section (i.e., in a direction from tablet-guide 135' upstream end 137' toward downstream end 139') as shown in Figures 17 and 17A. Coaction of the three surfaces 199', 141a and 141b against tablet 11F sliding along tablet-guide 135' orients tablet 11F so that tablet primary axis 19 is parallel to, and vertically aligned with, tablet-guide and body axes 215', 205'.

Tablet-contact surface 199' need not be flat and could have, in a cross section, a "v-shaped" surface with flat, intersecting tablet-surface portions (not shown). Such v-shaped tablet-contact surface would have an axis coaxial with body axis 205' said axis being vertically aligned with and parallel to tablet-guide axis 215'. The v-shaped tablet-contact surface would, in effect, be a mirror image of tablet-guide surfaces 141a and 141b, creating four coacting surfaces for aligning a tablet primary axis 19 and providing positive holding of tablet 11F for cutting.

As shown in Figures 15-18 and 20, alignment elements 193', 195' are positioned with respect to tablet-guide 51' and cutter apparatus 55'. First and second movable alignment elements 193', 195' are disposed along slot 279 in tablet-guide 135'. Each element 193', 195' consists of an elongate alignment portion 231', 233' secured to a respective member 329, 327. Each alignment portion 231', 233' includes an alignment surface 243', 241' which is preferably flat as shown in Figures 15-18, 20. Each member 327, 329 is pivotally attached to a respective support arm 237', 235' at hinge 331, 333 permitting back-and-forth movement of members 327, 329 toward and away from the direction of arrows 335, 337 (Figures 16, 17). Springs 339, 341 are provided to urge respective members 327, 329 upwardly in the direction of arrows 335, 337. Arms 235', 237' are coupled to an actuator 239', which is preferably a force-limited actuator, for lateral back and forth movement in the direction of arrows 249', 251' (Figures 16, 18) or apart in the direction of arrows 252, 254 (Figure 15) in response to appropriate signals from ECU 109. Actuator 239' is secured to an appropriate frame member (not shown) within housing 31.

Actuator 239' of device 10' includes a spring 280 shown schematically attached to arms 235', 237'. Energized spring 280 urges arms 235', 237 towards each other. Spring 280 is selected so that the force applied by elements 193', 195' is inadequate to crush tablet 11F. Motor 240' moves arms 235', 237' apart through toothed pinion 242' operatively engaged with toothed racks 244', 246'. Motor 240' is selected so that motor torque is inadequate to move arms 235', 237' further apart than shown in Figure 15. Current increase in response to stoppage of arms 235', 237' stops motor 240'. In response to an appropriate signal from ECU 109, motor 240' disengages from pinion 242', allowing each arm 235', 237' to be synchronously displaced an identical linear distance one toward the other (i.e., in the direction of arrows 249', 251') under the influence of spring 280.

In the example shown, cams 343, 345 may be provided to urge alignment portions 231', 233' into and out of the path of travel of tablet 11F along tablet-guide 135'. Cam 345 is fixedly secured with respect to the frame 350. Cam 343 is movably secured with respect to frame 350 by cam retaining walls 352, 354. Cam retaining walls 352, 354 are secured to frame 350 and dimensioned to allow cam 343 to reciprocate therewithin. A stop member (not shown) is provided in cam retaining walls 352, 354 to prevent cam 343 from escaping guide retaining walls 352, 354. A spring 349 is provided within cam retaining walls 352, 354 between frame 350 and cam 343. Cams 343, 345, act against surfaces 347, 349 of members 327, 329 to move alignment portions 231', 233' downwardly (i.e., in a direction opposite arrows 335, 337) when support arms 235', 237' are moved in the direction of arrows 252', 254' (Figure 15). Spring 349 causes cam 343 to remain in contact with surface 347 for a relatively greater duration than that of cam 345 so that portion 231' is extended into slot 279 subsequent in time to that of portion 233'.

In the second embodiment 10', operation of alignment elements 193', 195' is coordinated with that of alignment member 179'. In the pre-alignment position of Figure 15, the alignment elements 193', 195' are each in a position wherein they are retracted beneath tablet-guide 135' and alignment portions 231', 233' are out of the path of tablet 11F in tablet-guide 135'. In the alignment position shown in Figure 16, alignment element 195' alignment portion 233' is extended through slot 279 and into tablet-guide 135'. Alignment portion 233' would, therefore, obstruct tablet-guide 135' and stop downstream movement of any small tablet which might pass under body 197'. Alignment portion 231' does not extend into slot 279 because of the action of cam 343 urged into contact with surface 347 by spring 349.

In the alignment position shown in Figure 17, alignment portion 233' is extended into tablet-guide 135' so that both alignment portions 231', 233' are extended through slot 279 and into tablet-guide135'. In the final alignment and cutting position shown in Figure 18, alignment elements 193', 195' and respective alignment portions 231', 233' are synchronously displaced an identical linear distance one toward the other contacting oriented tablet 11F held between tablet-contact surface 199' and tablet-guide surfaces 141a, 141b. The elements 193', 195' are configured so that each alignment portion 231', 233' can move, at most, to slit 183'. Alignment portions 231', 233' move oriented tablet 11F in a direction so that tablet primary axis 25 is positioned directly over, and is aligned with, slit 183' for cutting of the tablet 11F along a plane coincident to tablet primary axis 25 at the cutting position 255'. In the second embodiment, the final alignment position is the cutting position 255'.

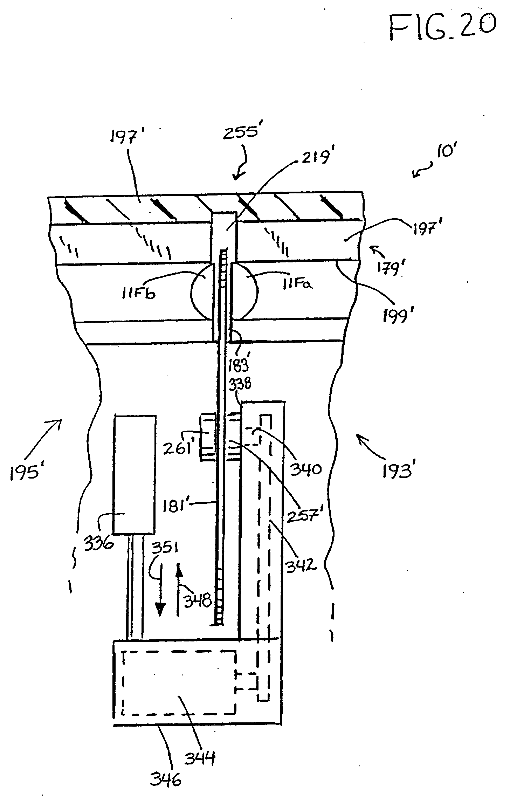

Before cutting, and as shown in Figure 20, at least one, and preferably both, alignment portions 231', 233' are retracted away from tablet 11F. Elements 193', 195' are returned to the position shown in Figure 15 leaving tablet 11F held in place between alignment member 179' tablet-contact surface 199b and tablet-guide surfaces 141a, 141b. Retraction of alignment portions 231', 233' out of contact with tablet 11F relieves unnecessary force against blade 181' permitting a clean cut of tablet 11F. Following cutting, tablet portions 11Fa and 11Fb are ejected toward tablet-guide discharge portion 145'and to a collection point, such as drawer 73, without interference from retracted elements 193', 195'.

As with first embodiment 10, the use of two alignment elements 193', 195' is most preferred because the synchronous movement of one element toward the other ensures proper tablet alignment. It is envisioned that tablet-cutting devices could be developed using only a single movable alignment element provided to contact the tablet and move the tablet into alignment for cutting along a plane coincident to a primary axis. For example, blade 181' could be made to move laterally to align tablet 11A-11P for cutting. Alignment elements 193', 195' could be positioned at other locations relative to the tablet-guide 51' and cutter apparatus 55', for example, at a position above tablet-guide surface 141'. Any suitable apparatus may be used to move elements 193', 195'. For example, a motor in combination with a belt could be used in place of the pinion 242' and racks 286', 288' shown.

Cutter apparatus 55' is provided to contact the aligned tablet 11F and cut tablet 11F along a plane coincident to a tablet primary axis, such as axis 19 or 25. Cutter apparatus 55' is positioned at cutting position 255' preferably along tablet-guide 135' at a location between first and second tablet-guide ends 137', 139'. As shown in Figures 15-20, cutter apparatus 55' again preferably comprises a rotary saw blade 181' with a cutting surface comprising plural teeth (such as teeth 265 shown in Figure 14). Blade 181' is mounted on rotatable shaft 257' and held in place on shaft 257' by a removable fastener 261'. Blade shaft 257' has a rotary axis 258'. As with embodiment 10, blade 181' may be easily removed from shaft 257' by removing fastener 261' and sliding blade 181' off of shaft 257'.

Shaft 257' is journaled in blade shaft support 338. Shaft 257' is rotatably coupled at a second end 340 by a belt 342 to a motor 344 within motor housing 346. Motor 344 rotates blade 181' in the direction of arrow 353 shown in Figure 19. Motor 344 is selected for high-speed rotation of blade 181'. Rotation of blade 181' at between about 3000-5000 rpm has been found to produce a clean cut of a tablet, such as tablets 11A-11P.

Blade 181' has a blade axis 253' and plural teeth such as teeth 265 in Figure 14, about the circumference of blade 181'. In the example, blade 181' is oriented so that axis 253' is aligned with slit 183' and is perpendicular to alignment member body axis 205' and tablet-guide center axis 215'. Rotary axis 258' is parallel to tablet guide axis 215'.

Motor housing 346, blade shaft support 338 and blade 181' are mounted for movement in any suitable manner. For example, these components may be mounted for translational movement to a suitable frame member (not shown) within housing 31 along guide structure (not shown). Suitable movement apparatus, such as a dual-acting linear actuator 336, is provided to act against such components and to move the blade 181' toward and through tablet 11F held at cutting position 255' in the direction of arrow 348 (Figure 20) and to move blade 181' away from the tablet 11F in the direction of arrow 351 following cutting. Movement of blade 181' in the direction of arrow 348 is sufficient so that the cutting surface of blade 181' can be extended into slot 219' for complete cutting of tablet 11F. Movement of actuator 336 is controlled by appropriate signals from ECU 109 as described more fully below.

A rotary blade 181' is preferred but other blade embodiments, such as the reciprocating and band-type blades described with respect to first embodiment 10, may be used in second embodiment 10'. Blade 181' need not be mounted below tablet-guide 135' and could be mounted above tablet-guide 135' or in any other orientation permitting cutting of the fully-aligned tablet.

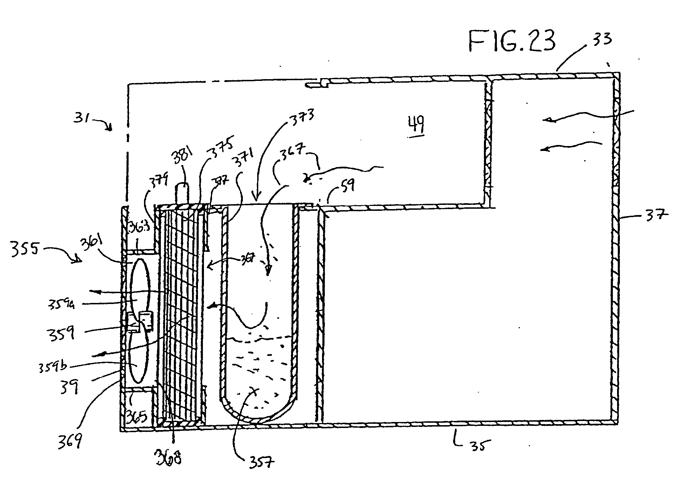

A vacuum apparatus system 355 (Figure 23) may optionally be disposed within housing 31 to remove cut tablet particulates 357 (i.e., tablet dust) generated by cutting of tablets 11A-11P with rotary blade 181 or 181'. Such vacuum apparatus system 355 aids in maintaining device cleanliness and limits any potential for possible contamination.

Vacuum apparatus system 355 comprises an exhaust fan 359 mounted along sidewall 39 in a compartment 361. Compartment 361 is defined by sidewall 39, walls 363, 365 and compartment opening 368. Fan 359 is powered by a motor (not shown) and rotation of fan blades 359a, 359b creates a partial vacuum in housing 31 drawing airborne particulates 357 in housing 31 in the direction of arrows 367. Particulates 257 are removed by a bag-filter 371 and a hepa-filter 375 and particulate-free air is discharged through discharge opening 369 (for example, a louvered grille) provided in sidewall 39.

Porous bag-filter 371 is removably positioned over a opening 373 in compartment rear wall 65. Bag-filter 371 traps large particles 357 typically on the order of 5µ in cross section. Hepa-filter 375 is removably positioned between bag-filter 371 and fan 359 and is secured by walls 377, 379. Hepa-filter 375 traps fine particulates 357 typically on the order of 0.2µ in cross section. Handle 381 is provided to grasp hepa-filter 375. Hepa-filter 375 may be removed from between walls 377, 379 for periodic replacement. Bag-filter 371 and hepa-filter 375 effectively remove all fragments 357 from housing 31.

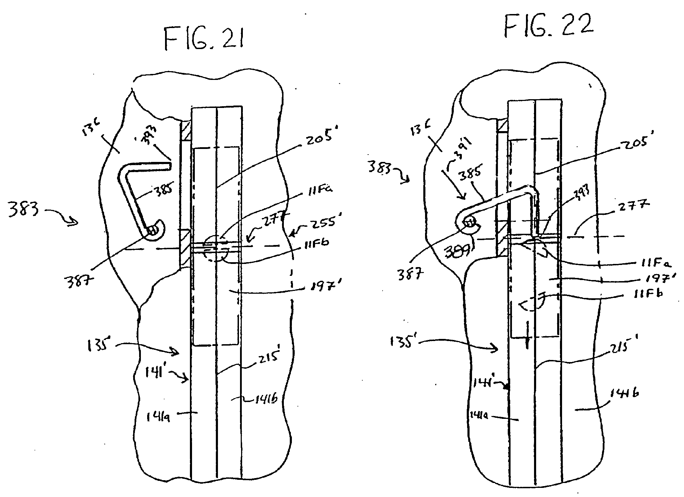

As shown in Figures 21 and 22, an ejector apparatus 383 may also optionally be provided along frame element 136 to eject cut table portions, such as portions 11Fa, 11Fb, from tablet-guide 135'. Ejector apparatus 383 is useful in dislodging tablets which might stick to tablet-guide 135' following compression between body 197' and tablet-guide surfaces 141a, 141b. Ejector apparatus 383 includes an ejector arm 385 attached to a rod 387 at a first arm end 389. Rod 387 is mounted adjacent to tablet-guide 135' along frame element 136. Rod 387 is coupled to a motor (not shown) which rotates rod 387 back and forth in and away from the direction of arrow 391 in response to at least one signal generated by ECU 109.

In a ready position shown in Figure 21, ejector arm 385 is positioned out of the path of tablet-guide 135'. In a tablet-ejection position shown in Figure 22, ejector arm 385 is rotated in the direction of arrow 391 so that arm end 393 contacts tablet 11F ejecting cut-tablet portions 11Fa, 11Fb from cutting position 255' and to tablet-guide discharge portion 145'.

In first embodiment 10, the function of ejector apparatus 383 is performed by alignment member 179. Rotation of alignment member 179 ejects cut tablet portions 11Fa, 11Fb away from cutting position 255 and to discharge portion 145 of tablet-guide 135.

The components comprising ejector apparatus 383 may be of any suitable configuration. For example, a pin axially aligned with tablet-guide axis 215' and mounted for reciprocating back and forth movement may be used to eject cut-tablet portions 11Fa, 11Fb.

Operation of embodiments 10, 10' will now be described with respect to Figures 4-23. In both embodiments 10, 10' electrical power control switch 45 is switched to the "on" position and a canister 129 containing the desired tablet is placed on base 127. The operator enters the appropriate input information into ECU 109 through manipulation of keys 113-121 on control panel 111. ECU 109 causes first tablet 11G (in Figures 6-14) or 11F (in Figures 15-20) to be metered out from canister 129 and to tablet-receiving portion 143, 143' of tablet-guide 135, 135'. Tablet 11G or 11F passes through the photo-electric system (or other tablet-counting apparatus) whereupon a count is registered with ECU 109. Tablet 11G or 11F may also pass through tablet-staging compartment 267, if provided.

In first embodiment 10, tablet-pusher arm 161 moves tablet 11G in the direction of arrow 159 from tablet-receiving portion 143, along upper guide portion 147 and to inclined lower tablet-guide portion 149. As tablet 11G is moved by arm 161, frictional contact between tablet 11G with guide surface 141 and gate 171 begins to align tablet 11G so that primary axis 19 is moved toward a position parallel with rotary axis 258 and perpendicular to tablet-guide axis 215.

In the second embodiment 10', tablet 11F enters tablet-guide 135' at tablet-receiving portion 143' along tablet-guide upstream end 137'.

Next, the tablet-cutting devices of embodiments 10, 10' direct tablet 11G or 11F to a first, pre-alignment, position shown in Figures 9 and 15 in which tablet 11G or 11F is held prior to alignment. In first embodiment 10, upon reaching lower tablet-guide portion 149, tablet 11G slides down the flat surface of the inclined lower tablet-guide portion 149 and into contact with gate 185 whereupon motion of tablet 11G is temporarily stopped.

In the second embodiment 10', tablet 11F slides down tablet-guide 135' portion. As tablet 11F slides down tablet-guide 135', frictional contact between tablet 11F and guide surfaces 141a, 141b begins to orient tablet 11F so that primary axis 19 is generally parallel with tablet-guide axis 215' and rotary axis 258' and primary axis 25 is generally perpendicular with such axes 215', 258'.

Tablet 11F moves down the flat surfaces 141a, 141b of tablet-guide 135' and into contact with alignment member 179' tablet-contact surface 199a whereupon surface 199a blocks further motion of tablet 11F. Support 297 is positioned at an intermediate position (Figure 15) by actuator 319.

Next, the tablet-cutting devices of embodiments 10, 10' direct tablet 11G, 11F to a second position in which tablet 11G, 11F is oriented in a first direction by action of the surfaces forming cavity 221, 221' coacting against the moving tablet 11G, 11F as shown in Figures 10, 10A and 16-17A.

In the first embodiment 10, ECU 109 provides a signal to actuator 189 raising gate 185 in the direction of arrow 191. Tablet 11G moves down lower tablet-guide portion 149 toward wedge-shaped cavity 221 and into alignment position. Tablet 11G moves down guide surface 141 until coaction of surfaces 199 and 141 stop tablet movement. If one end of an elongate, multi-angle, triangular or rectangular tablet (i.e., tablets 11A-11E, 11M-11P) contacts surfaces 199 and 141 before the other end, then such tablet will continue to slide until both ends 16, 17 (or an edge surface 18 ) are in contact with surfaces 141 and 199 resulting in the tablet being oriented in a first direction with primary axis 19 being aligned parallel to rotary axis 258 and perpendicular to tablet-guide axis 215. A coated, disk or ball-shaped tablet (i.e., tablets 11G, 11I, 11F) will slide toward cavity until tablet surface 15 contacts each of the tablet-contact surfaces 199 and guide surface 141 again resulting in orientation of tablet primary axis 19 parallel to rotary axis 258 and perpendicular to tablet-guide axis 215.

In the second embodiment 10' (Figure 16), ECU 109 sends a signal to actuator 319 raising support 297 in the direction of arrow 321. As shown in Figure 16, static frictional force is relieved and tablet 11F moves down tablet-guide 141' while remaining in contact with surface 199b. Spring 305 urges body 197 and tablet-contact surface 199b toward tablet-guide surfaces 141a, 141b in the direction of arrow 303 (Figure 17) forming cavity 221'.

As shown in Figures 17, 17A, ball-shaped tablet 11F slides down guide surface 141' until coaction of surfaces 199' and 141' with tablet surface 15 stops tablet movement. Alignment element portion 233' of element 195' is positioned in tablet-guide 135' to stop movement of any tablet small enough to pass between tablet-contact surface 199b and tablet-guide surfaces 141a, 141b. As a result of the coaction of surfaces 199b and 141a, 141b, tablet 11F is oriented in a first direction with primary axis 19 being axially aligned (i.e., parallel) with tablet-guide axis 215. If the tablet is initially askew in the tablet guide 141', coaction of the surfaces 199b and 141a, 141b will cause the tablet to be oriented so that the tablet is moved to the oriented position.

Next, a signal from ECU 109 retracts actuator 319 and spring 316 lowers support 297 in the direction of arrow 323 to the position shown in Figure 18 causing body 197' to pivot in a direction opposite to arrow 303. The body 197' firmly, but not crushingly, clamps and holds tablet 11F between surfaces 199b and 141a, 141b for final alignment and cutting.

Next, the tablet-cutting devices of embodiments 10, 10' complete the automatic alignment process. In the first embodiment 10, and as shown in Figure 11, alignment elements 193, 195 and alignment portions 231, 233 are synchronously moved together in the direction of arrows 249, 251 by actuator 239 in response to a signal from ECU 109. Alignment elements 193, 195 move until each portion 231, 233 contacts tablet 11G. If the tablet 11G is off center along guide 141, it will be moved toward the center of the tablet guide by the elements 193, 195. As a result, primary axis 25 is coaxially aligned with tablet-guide axis 215 and blade axis 253. Tablet 11G is now fully aligned for cutting. Alignment elements 193, 195 retract (i.e., move in the direction opposite arrows 249, 251) before tablet 11G is cut.

In the second embodiment 10' and as shown in Figure 18, ECU 109 provides a signal to actuator 239' causing each alignment element 193', 195' alignment portion 231', 233' to be synchronously moved toward the other in the direction of arrows 249', 251' until each element 193', 195' contacts tablet 11F surface 15. If the tablet is above or below slit 183 it is moved by the alignment portions 231', 233' until axis 25 is aligned with the slit 183 and blade axis 253'. As a result, primary axis 25 is aligned in a direction perpendicular with tablet-guide axis 215' and coaxially aligned with blade axis 253'. Tablet 11F is now fully aligned for cutting. As with the first embodiment, alignment portions 231', 233' or respective elements 193', 195' are moved away from aligned tablet 11F before tablet 11F is cut.

Next, the tablet-cutting device of embodiments 10, 10' automatically cuts the fully aligned tablet 11G, 11F as shown in Figures 12, 13 and 19 and 20. In the first embodiment 10, a signal provided by ECU 109 commences rotation of blade 181 and alignment member body 197. Tablet 11G is urged toward and into rotating blade 181 by rotation of alignment member 179. Biasing action of tablet-guide 135 firmly holds tablet 11G against tablet-contact surface 199 to ensure that tablet 11G will remain aligned during cutting. Blade 181 cuts completely through tablet 11G as shown in Figure 13 producing tablet portions, for example portions 11Ga and 11Gb. Alignment member body 197 continues to rotate until that portion of contact surface 199 which was in contact with tablet surface 15 is no longer in contact with the tablet surface 15 causing tablet portions 11Ga and 11Gb to move to tablet-guide discharge end 145 and to fall into drawer 73. Rotation of alignment member body 197 stops following cutting.

In the second embodiment 10', a signal from ECU 109 commences rotation of blade 181' and operation of actuator 347 to move rotating blade 181' toward tablet 11F held at cutting position 255'. Rotary saw blade 181' is extended through slit 183' and slot 219' in body 197' cutting completely through aligned tablet 11F as shown in Figure 20 to produce tablet portions 11Fa and 11Fb. A signal from ECU 109 causes actuator 347 to retract blade 181' below tablet-guide 135' and causes actuator 319 to move support 297 in the direction of arrow 321 moving surface 199b away from tablet 11F thereby releasing the clamping action of body 197' against tablet portions 11Fa, 11Fb. Tablet portions 11Fa, 11Fb then move to tablet-guide discharge end 145' under the influence of gravity or based on the action of ejector apparatus 383. Cut-tablet portions 11Fa, 11Fb fall into drawer 73.

Vacuum apparatus 355 draws particulates 357 away from cutter apparatus 55, 55' through bag-filter 371 and hepa-filter 375.

In both embodiments 10, 10', the tablet-cutting cycle is repeated until the desired number of tablets are cut. It should be noted that device 10, 10' can cut the tablets into further tablet portions (i.e., quarters, eighths, etc.) by simply metering the cut tablet portions back through the device for a further cutting cycle.

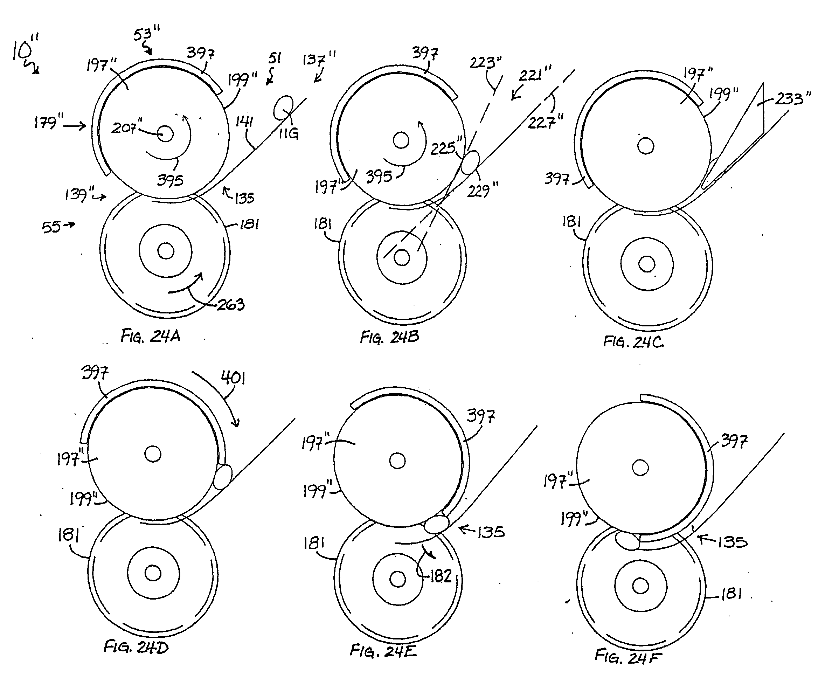

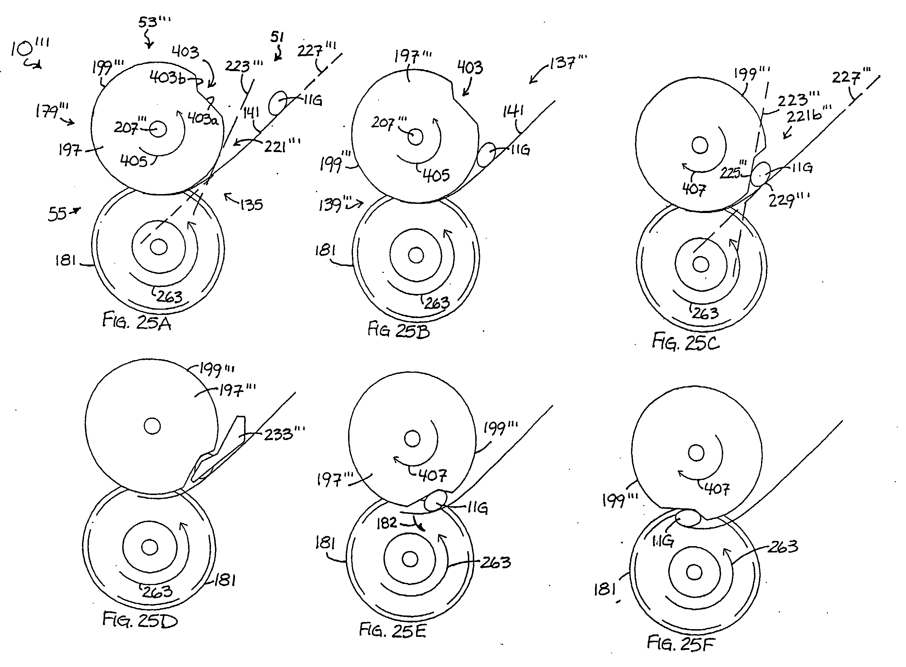

Figures 24A-24F and 25A-25F are provided to illustrate, respectively, third 10" and fourth 10'" embodiments of the invention which include alternative alignment apparatus 53" and 53'". All other components of embodiments 10" and 10'" may be identical to those of embodiment 10 and the description and drawings of such components comprising embodiment 10 are adopted and incorporated by reference with respect to the third and fourth 10" and fourth 10'" embodiments.

Referring specifically to Figures 24 and 25, those figures show schematic side elevation diagrams of portions of the tablet guide 51, tablet alignment 53" and 53'" and tablet cutter 55 apparatus. The tablet guide 51 apparatus includes a tablet-guide 135, a lower guide portion 149, tablet-discharge end 145 upstream end 137 and downstream end 139 as described and illustrated with respect to first embodiment 10. Coated tablet 11G is shown moving along tablet-guide 135 toward downstream end 139.

The tablet cutter apparatus 55 ofthird and fourth embodiments 10", 10'" is identical to cutter apparatus 55 of embodiment 10 including rotary saw blade 181 mounted on powered rotatable shaft 257 and rotary axis 258. As with first embodiment 10, a signal from ECU 109 causes a motor (for example motor 259 in Figures 6 and 7) to rotate blade 181 in the direction of arrow 263 shown in Figures 24A-24F and 25A-25F.

The tablet alignment apparatus 53 " and 53'" include, respectively, alignment member 179", 179'" provided to orient the tablet with tablet primary axis 19 parallel to a first direction, such as to rotary axis 258 and perpendicular to tablet-guide axis 215. Alignment members 179", 179'" each include a rotatable drum-shaped body 197", 197'" with circumferential tablet-contact surface 199", 199'". Each body 197", 197'" has a width dimension coextensive with the width dimension of tablet-guide surface 141 to ensure contact between body 197", 197'" and tablet 11G on tablet-guide surface 141. An annular slot, such as slot 219 of Figures 6 and 13, may be provided around the circumferential surface of body 197", 197'" to permit blade 181 to extend into body 197", 197'" to ensure a complete cut of tablet 11G without damaging body 197", 197'".

Unlike first embodiment 10, tablet-contact surface 199", 199'" of third and fourth embodiments 10", 10'" is made of a smooth, low-friction material, such as plastic (i.e., ABS, acetal, nylon, etc.) or metal and is provided to minimize frictional contact with the tablet 11G.

Body 197", 197'" is again mounted on a powered, rotatable shaft 207", 207'" journaled in wall 213 such that tablet-contact surface 199", 199'" is spaced across from tablet-guide surface 141. Shaft 207", 207'" is rotatably coupled to a motor, such as the motor represented by reference number 217 in Figures 6 and 7, which rotates shaft 207", 207'" and body 197", 197'" in response to a signal from ECU 109 as described more fully below.

As shown in Figures 24B and 25B, a wedge-shaped cavity 221", 221'" is formed between tablet-contact surface 199", 199'" and tablet-guide surface 141, 141 provided to orient tablet 11G in the first direction as described with respect to embodiments 10 and 10'. Cavity 221", 221'" may be defined in a side elevation (Figures 24B and 25A, 25B) by a first tablet-contact plane 223", 223'" which is tangent to a surface 199", 199'" at the point of contact 225", 225'" with tablet 11G and a second tablet-contact plane 227", 227'" tangent to the tablet-guide surface 141 at the point of contact 229", 229'" with tablet 11G. Cavity 221", 221'" has a decreasing cross section from upstream end 137 to downstream end 139 as shown in Figure 17A with respect to embodiment 10. A further wedge-shaped cavity 221b'" is provided between surface 403b and tablet-guide surface 141'".

Referring specifically to the alignment apparatus 53 ", body 197" is mounted for uni-direction rotational movement only in the direction of arrow 395. The alignment apparatus 53" further includes half drum 397 provided to urge tablet 11G into position for cutting by cutter apparatus 55 and to eject the tablet portions following cutting. Half drum 397 has a width dimension coextensive with the width of body 197" and is mounted for bi-directional rotational movement on, for example, a rotatable shaft (not shown) coaxial with shaft 207" and journaled in wall 213. Half drum 397 is rotatably coupled to a motor (not shown) and, in response to a signal from ECU 109, said motor rotates half drum 397 toward and away from arrow 401 shown in Figure 24D as described more fully below. Half drum 397 has an annular slot (not shown) which is coextensive with slot 219" (not shown but identical to slot 219 of Figure 7) in body 197" through which blade 181 may extend when cutting tablet 11G.

Referring specifically to the alignment apparatus 53'" of the fourth embodiment 10'", body 197'" is mounted for bi-directional rotational movement in the direction of arrows 405, 407 responsive to a signal from ECU 109 as described more fully below. Body 197'" includes a cut-out portion 403 along tablet-contact surface 199'". Cut-out portion 403 includes surfaces 403a and 403b.

The alignment apparatus 53", 53'" further include, respectively, alignment elements 193", 193'" and 195", 195'" provided to move the oriented, partially aligned tablet 11G in a direction for final alignment and cutting along a plane coincident to axis 25. Such elements 193", 193'", 195", 195'" are present in each embodiment of Figures 24A-24F and 25A-25F but are schematically illustrated only with respect to Figures 24C and 25C in order to provide a clearer illustration of the operation of alignment member 179", 179'". Although the profile of alignment portions 231", 231'" is as shown in Figures 24C and 25C, the structure and operation of alignment elements 193", 193'", 195", 195'", including actuator 239, is identical to those of embodiment 10 and the description and illustration of such elements is incorporated herein by reference with respect to third and fourth embodiments 10", 10'".

Operation of third and fourth embodiments 10", 10'" will now be described with reference to Figures 24 and 25. Referring first to the operation of embodiment 10" and Figures 24A and B, a tablet 11G moves down tablet guide surface 141" and into cavity 221". Body 197" rotates in the direction of arrow 395. Rotation of the low-friction surface 199" of body 197" against tablet 11G in cavity 221 vibrates the tablet and causes the tablet to be oriented with axis 19 parallel to rotary blade axis 258 and perpendicular to tablet-guide 215 and blade axes 253 of Figures 6 and 7. Rotation of body 197" is stopped following alignment.

As is next shown in Figure 24C, alignment portions 231", 233 " of alignment elements 193", 195 " synchronously move together to center tablet 11G with primary axis 25 coaxially aligned (i.e., parallel) with tablet-guide 215 and blade axes 253. Alignment portions 231", 233" are retracted following full alignment.

As shown in Figures 24D-24F, half drum 397 moves in the direction of arrow 401 to urge tablet 11G down tablet-guide 135 and to cutting position 255" where tablet 11G is cut into equal portions along axis 25 by blade 181. The tablet portions are then ejected, for example into drawer 73.

As shown in Figures 24E and 24F, tablet-guide 135 flexes in the direction of arrow 148" to bias tablet 11G against body 197" thereby holding tablet 11G firmly, but not crushingly, against body 197" for cutting by rotary blade 181. Half drum 397 returns to the position shown in Figure 24A in preparation for the next cutting cycle.

The embodiment 10'" of Figures 25A-25F operates in the following manner. As shown in Figures 25A and B, tablet 11G moves down tablet-guide surface 141'" toward cavity 221'" until tablet 11G contacts tablet-contact surface 199'" at which time further movement of tablet down tablet-guide 135 is stopped. Rotation of body 197'" in the direction of arrow 405 vibrates tablet 11G positioned against body 197'" causing tablet 11G to be oriented in a first direction with axis 19 parallel to the rotary axis of body 197'" and perpendicular to tablet-guide 135 and blade axes 215, 253 of Figures 6 and 7.

Referring to Figure 25C, after a predetermined time the direction of rotation of body 197'" is reversed causing body 197'" to rotate in the direction of arrow 407. Rotation of body 197'" in the direction of arrow 407 causes tablet 11G to enter cut-out portion 403 and against surface 403a. Coaction of surface 403a and surface 141 forms a cavity 221'" which is, in effect, a continuation of cavity 221'", and maintains the orientation of partially aligned tablet 11G. Rotation of body 197'" is then stopped temporarily.

Referring next to Figure 25D, tablet 11G is held firmly in cavity 221b'" against tablet guide surface 141 by surfaces 403a and 403b. Alignment portions 231,'" 233'" of elements 193,'" 195'" then synchronously move together to center oriented tablet 11G in the second direction with tablet primary axis 25 coaxially aligned with tablet-guide 215 and blade axes 253. Alignment portions 231,'" 233'" are then retracted away from the now fully aligned tablet 11G.

Referring finally to Figures 25E-25F, rotation of body 197'" in the direction of arrow 407 is recommenced. Surfaces 403a, 403b urge tablet 11G against rotary blade 181 and then eject cut tablet portions 11Ga, 11Gb, for example into drawer 73 shown in Figure 1. Tablet-guide 135 flexes in the direction of arrow 148'" to bias tablet 11G against body 197'" thereby holding tablet 11G firmly, but not crushingly, against body 197'" for cutting by rotary blade 181.

While the principles of this invention have been described in connection with specific embodiments, it should be understood clearly that these descriptions are made only by way of example and are not intended to limit the scope of the invention.

## Claims

1. An automatic tablet-cutting device comprising:
- tablet-guide apparatus having a tablet-receiving portion and a tablet-guide portion along which a tablet is directed from the receiving portion to cutter apparatus;
- tablet-alignment apparatus positioned with respect to the tablet-guide, the alignment apparatus comprising:
- an alignment member having a tablet-contact surface spaced apart from the tablet-guide to form a cavity with a decreasing cross-section therebetween, the tablet-contact surface and tablet-guide coacting to orient the tablet with a primary axis substantially parallel to a first direction; and
- at least one alignment element movably mounted to contact the oriented tablet and move the tablet into alignment for cutting at a cutting position; and
- tablet-cutter apparatus positioned to contact the aligned tablet and cut the tablet substantially in half.

2. The device of claim 1 wherein the tablet-guide portion includes a guide surface in contact with the tablet.

3. The device of claim 2 wherein the guide surface comprises plural surface portions and the guide surface has a v-shaped cross section.

4. The device of claim 2 wherein the guide surface is inclined.

5. The device of claim 2 wherein the alignment member is movably mounted between at least an alignment position in which the tablet-contact surface and tablet-guide surfaces coact to orient the tablet with the primary axis substantially parallel to the first direction and a further position in which the tablet-contact surface is positioned out of contact with the tablet.

6. The device of claim 2 wherein the alignment member comprises:
- a cylindrically-shaped body mounted for rotation in a first direction, the body having a circumferential surface comprising the tablet contact surface, the body mounted so that body rotation in the first direction moves a tablet positioned against the tablet contact surface in the cavity thereby orienting the tablet; and
- a member mounted for movement in a second direction and positioned concentrically around at least a portion of the tablet-contact surface and having a tablet-contact portion, the member mounted so that rotation in the second direction moves the tablet-contact portion against the aligned tablet and moves the tablet to the cutter apparatus for cutting.

7. The device of claim 2 wherein the alignment member comprises a cylindrically-shaped body mounted for bi-directional rotation in first and second directions, the body having:
- a circumferential surface comprising the tablet contact surface;
- a cut-out portion along the surface having first and second surfaces forming a tablet-receiving groove; and
- rotation of the body in the first direction moves a tablet positioned against the tablet-contact surface in the cavity thereby orienting the tablet and rotation of the body in the second direction positions the oriented tablet in the groove with the first and second surfaces coacting to hold the aligned tablet and move the tablet to the cutter apparatus for cutting.

8. The device of claim 1 wherein the alignment apparatus includes first and second alignment elements each mounted for movement between a position in which the element is out of contact with the tablet and a further position in which the elements synchronously move together to contact the oriented tablet and move the tablet into alignment for cutting.

9. The device of claim 1 further including biasing apparatus positioned with respect to the tablet in the tablet-guide, said biasing apparatus providing a force against the tablet so that the tablet is firmly, but not crushingly, held for cutting by the cutter apparatus.

10. The device of claim 1 wherein the cutter apparatus comprises:
- a rotary saw blade mounted for rotational movement to cut an aligned tablet; and
- a motor operatively connected to the blade for rotating the blade.

11. The device of claim 1 further including vacuum apparatus positioned with respect to the cutter apparatus, the vacuum apparatus including:
- air-flow apparatus positioned to move particulate containing air away from the cutter apparatus and through at least one filter; and
- the at least one filter includes at least one surface removing the cut-tablet particulates.

12. An automatic tablet-cutting device comprising:
- tablet-guide apparatus having a tablet-receiving portion and a tablet guide portion along which a tablet is directed from the receiving portion to cutter apparatus;
- tablet-alignment apparatus positioned with respect to the tablet-guide and cutter apparatus, the alignment apparatus comprising:
- an alignment member having a tablet-contact surface spaced apart from the tablet guide to form a cavity with a decreasing cross-section therebetween, the
- tablet contact surface and tablet guide coacting to orient the tablet with a primary axis substantially parallel to a first direction; and
- at least one alignment element movably mounted to contact the oriented tablet and move the tablet into alignment for cutting at a cutting position; and
- tablet-cutter apparatus for cutting the aligned tablet, the cutter apparatus including a cutting surface movable between a first position in which the cutting surface is positioned out of contact with the tablet and a second position in which the cutting surface cuts the tablet substantially in half.

13. The device of claim 12 wherein the tablet-guide is inclined.

14. The device of claim 13 wherein the tablet-guide includes at least one guide surface configured to align the tablet primary axis in a direction substantially parallel with a tablet-guide axis.

15. The device of claim 14 wherein the guide surface comprises plural surfaces including a v-shaped cross section and the plural guide surfaces coact to orient the tablet so that the tablet primary axis is substantially parallel to the tablet-guide axis.

16. The device of claim 12 wherein the tablet-guide further includes a tablet-guide portion onto which cut tablet portions are directed from the cutter apparatus to a tablet-guide end.

17. The device of claim 15 wherein the alignment member is movably mounted between at least an alignment position in which the tablet-contact surface and tablet-guide surfaces coact to orient the tablet with the primary axis parallel to the first direction and a release position in which the tablet-contact surface is positioned out of contact with the tablet.

18. The device of claim 17 wherein the alignment member comprises:
- a support member movably mounted between at least the alignment and release positions;
- a body pivotally mounted on the support member, the body including the tablet-contact surface, an upstream end, a downstream end and attachment structure movably mounting the body to the support member along the body upstream end; and
- biasing apparatus acting against the body to urge the tablet-contact surface toward the tablet-guide surface so that, in the alignment position, the tablet is contacted for alignment by the tablet-contact surface and tablet-guide surfaces.

19. The device of claim 12 wherein the alignment apparatus includes first and second alignment elements each mounted for movement between a position in which the element is out of contact with the tablet and a further position in which the elements synchronously move together to contact the oriented tablet and move the tablet into alignment for cutting.

20. The device of claim 19 wherein:
- the cutter apparatus cutting surface is perpendicular to a tablet-guide axis;
- the first tablet-alignment element has an alignment portion mounted for movement at a position along the tablet-guide upstream of the cutter apparatus;
- the second tablet-alignment element has an alignment portion mounted for movement at a position along the tablet-guide downstream of the cutter apparatus; and further including:
- actuator apparatus operatively connected to the first and second tablet-alignment elements for moving such elements between at least:
- a first position in which the second element alignment portion is positioned in the guide and the first element alignment portion is positioned out of the guide;
- a second position in which the first and second element alignment portions are in the guide and are synchronously moved together along the tablet-guide axis to contact a tablet positioned between said portions thereby aligning the tablet for cutting at the cutting position; and
- a third position in which at least the second element alignment portion is positioned out of the guide to avoid engagement with a tablet on the guide surface.

21. The device of claim 12 wherein the cutter apparatus comprises:
- a rotary saw blade including the cutting surface and the blade is mounted for movement between the first and second positions; and
- a motor operatively connected to the blade for rotating the blade.

22. The device of claim 21 wherein the blade has an axis perpendicular to a tablet-guide axis and the blade cuts the tablet along a tablet axis perpendicular to the tablet-guide axis.

23. The device of claim 12 further comprising ejector apparatus positioned with respect to the cutter apparatus, the ejector apparatus comprising
- an ejector element movable between a ready position in which the element is out of contact with the tablet and an ejection position in which a contact portion contacts cut tablet portions and urges such portions away from the cutter apparatus; and
- an actuator coupled to the ejector element for moving the element between the ready and ejection positions.

24. The device of claim 12 further including vacuum apparatus positioned with respect to the cutter apparatus, the vacuum apparatus including:
- air-flow apparatus positioned to move particulate containing air away from the cutter apparatus and through at least one filter; and
- the at least one filter includes at least one surface removing the cut-tablet particulates.

25. A method of automatically cutting a tablet into tablet portions having substantially equal volume comprising the steps of:
- positioning the tablet along a tablet-guide;
- automatically orienting the tablet into an orientation in which a tablet first primary axis is parallel to a first direction;
- automatically moving the tablet in such orientation along the tablet-guide into alignment for cutting at a cutting position; and
- cutting the aligned tablet.

26. The method of claim 25 wherein the automatic orienting step comprises:
- positioning the tablet on a tablet-guide surface along the tablet-guide alignment position; and
- contacting the positioned tablet with a tablet-contact surface, said tablet-contact surface being spaced apart from the tablet-guide surface and positioned to form a cavity with a decreasing cross-section therebetween, the tablet-contact and tablet-guide surfaces coacting to orient the tablet.

27. The method of claim 26 wherein the automatic moving step comprises contacting the oriented tablet with spaced apart first and second alignment elements, said alignment elements synchronously moving together to contact the oriented tablet therebetween, the alignment elements coacting to move the tablet into alignment for cutting at the cutting position.

28. The method of claim 25 further including the step of holding the aligned tablet for cutting.

29. The method of claim 27 including the further step of ejecting cut tablet portions from the cutting position.

30. The method of claim 25 wherein the cutting step comprises sawing the tablet.

31. The method of claim 25 further including the step of removing cut tablet particulates with a vacuum apparatus.

32. An automatic tablet-cutting device comprising:
- a housing;
- tablet-guide apparatus positioned with respect to the housing, the tablet guide apparatus having a tablet-receiving portion and a tablet-guide surface along which a tablet is directed from the receiving portion to cutter apparatus;
- tablet-alignment apparatus positioned with respect to the tablet guide, the alignment apparatus comprising:
- an alignment member having a tablet-contact surface spaced apart from the tablet-guide to form a cavity with a decreasing cross-section therebetween, the tablet-contact surface and tablet-guide surface coacting to orient the tablet with a primary axis substantially parallel to a first direction; and
- first and second movable alignment elements movably mounted between at least a position in which the elements are out of contact with the tablet and a second position in which the alignment elements synchronously move together to contact the oriented tablet and move the tablet into alignment for cutting at a cutting position; and
- tablet-cutter apparatus positioned with respect to the tablet guide to contact the aligned tablet and cut the tablet substantially in half.

33. The device of claim 32 wherein the alignment member comprises:
- a support member movably mounted between at least an alignment position in which the alignment member is positioned to orient the tablet and a further position in which the alignment member is out of contact with the tablet;
- a body pivotally mounted on the support member, the body including the tablet-contact surface, an upstream end, a downstream end and attachment structure movably mounting the body to the support member along the body upstream end; and
- biasing apparatus acting against the body to urge the tablet-contact surface toward the tablet-guide surface so that, in the alignment position, the tablet is contacted for alignment by the tablet-contact surface and tablet-guide surfaces.

34. The device of claim 33 wherein the cutter apparatus comprises:
- a rotary saw blade mounted for rotational movement to cut an aligned tablet; and
- a motor operatively connected to the blade for rotating the blade.

35. The device of claim 32 wherein the alignment member comprises:
- a cylindrically-shaped body mounted for rotation in a first direction, the body having a circumferential surface comprising the tablet contact surface, the body mounted so that body rotation in the first direction moves a tablet positioned against the tablet contact surface in the cavity thereby orienting the tablet; and
- a member mounted for movement in a second direction and positioned concentrically around at least a portion of the tablet-contact surface and having a tablet-contact portion, the member mounted so that rotation in the second direction moves the tablet-contact portion against the aligned tablet and moves the tablet to the cutter apparatus for cutting.

36. The device of claim 32 wherein the alignment member comprises a cylindrically-shaped body mounted for bi-directional rotation in first and second directions, the body having:
- a circumferential surface comprising the tablet contact surface;
- a cut-out portion along the surface having first and second surfaces forming a tablet-receiving groove; and
- rotation of the body in the first direction moves a tablet positioned against the tablet-contact surface in the cavity thereby orienting the tablet and rotation of the body in the second direction positions the oriented tablet in the groove with the first and second surfaces coacting to hold the aligned tablet and move the tablet to the cutter apparatus for cutting.
